(19) Europäisches Patentamt
European Patent Office
Office européen des brevets

(11) EP 2 580 291 B1

# (12) EUROPÄISCHE PATENTSCHRIFT

(45) Veröffentlichungstag und Bekanntmachung des Hinweises auf die Patenterteilung:
**13.08.2014 Patentblatt 2014/33**

(21) Anmeldenummer: **11716414.5**

(22) Anmeldetag: **28.04.2011**

(51) Int Cl.:
***C09D 11/00*** *(2014.01)*

(86) Internationale Anmeldenummer:
**PCT/EP2011/056694**

(87) Internationale Veröffentlichungsnummer:
**WO 2011/154192 (15.12.2011 Gazette 2011/50)**

## (54) NEUARTIGE MATTIERUNGSMITTEL FÜR UV-ÜBERDRUCKLACKE

NOVEL MATTING AGENTS FOR UV OVERPRINT VARNISHES

NOUVEAUX AGENTS DE MATAGE POUR VERNIS DE SURIMPRESSION UV

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.06.2010 DE 102010029945**

(43) Veröffentlichungstag der Anmeldung:
**17.04.2013 Patentblatt 2013/16**

(73) Patentinhaber: **Evonik Degussa GmbH
45128 Essen (DE)**

(72) Erfinder:
- **LINDNER, Gottlieb
53175 Bonn (DE)**
- **MEIER, Karl
53347 Alfter (DE)**
- **SCHILLING, Christof
63579 Freigericht (DE)**
- **CHRISTIAN, Hans Dieter
88662 Überlingen (DE)**

(56) Entgegenhaltungen:
**WO-A1-2006/108520 WO-A2-02/24344
WO-A2-2008/068154 WO-A2-2009/103651
DE-A1-102008 010 346 US-A1- 2004 038 036**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 580 291 B1

Printed by Jouve, 75001 PARIS (FR)

## Beschreibung

Gebiet der Erfindung

Die Erfindung betrifft mattierte UV-Überdrucklacke umfassend Siliciumdioxide, deren Oberfläche durch Behandlung mit einem mehrfachbindungenenthaltenden Organopolysiloxan dahingehend modifiziert wurde, dass sie besonders gut für den Einsatz als Mattierungsmittel von UV-Überdrucklacken und Druckfarben geeignet sind, sowie ein Verfahren zur Herstellung der UV-Überdrucklacke und Druckfarben bzw. der oberflächenmodifizierten Siliciumdioxide. Beispielsweise werden UV-Überdrucklacke eingesetzt, um bedruckte Flächen zu mattieren.

Stand der Technik

Die Mattierung von UV-Lacken, UV-Überdrucklacken oder Druckfarben stellt seit jeher ein großes Problem dar. Im Gegensatz zu anderen Lacksystemen kommt es bei UV-Lacken und UV-Überdrucklacken während der Aushärtung nicht zu Schrumpfungen. Dadurch kann sich keine raue Oberfläche ausbilden und die als Mattierungsmittel zugegebenen Partikel können ihre mattierende Wirkung nicht entfalten.

In einer umfangreichen Studie (siehe RadTech Europe 2005 Conference and Exposition) hat H. D. Christian verschiedene pyrogene und gefällte Kieselsäuren als Mattierungsmittel in UV-Lacken getestet. Es wurden sowohl unbehandelte Kieselsäuren als auch mit PE-Wax gecoatete Kieselsäuren als auch mit Polysiloxanen gecoatete Kieselsäuren getestet. Christian kommt zu dem Ergebnis, dass die Mattierung von UV-Lacken nach wie vor ein komplexes Problem darstellt und dass in der Studie nicht gezeigt werden konnte, welches Mattierungsmittel das Mattierungsmittel der Wahl für UV-Lacke darstellt.

Aufgabe

Es besteht somit nach wie vor ein hoher Bedarf an speziell für die Mattierung von UV-Lacken, UV-Überdrucklacken und Druckfarben entwickelten Mattierungsmittel auf Basis von Siliciumdioxiden.

Aufgabe der vorliegenden Erfindung war es daher, oberflächenmodifizierte Siliciumdioxide zur Verfügung zu stellen, welche beim Einsatz als Mattierungsmittel in UV-Lacken, UV-Überdrucklacken und Druckfarben, speziell UV härtenden Klarlacken, bessere anwendungstechnische Eigenschaften zeigen als die bislang bekannten siliciumdioxidbasierten Mattierungsmittel. Ein Verfahren zur Herstellung der oberflächenmodifizierten Kieselsäuren soll genauso bereitgestellt werden wie ein Verfahren zur Herstellung der Lacke und Druckfarben.

Weitere nicht explizit genannte Aufgaben ergeben sich aus dem Gesamtzusammenhang der nachfolgenden Beschreibung, Beispiele und Ansprüche.

Aus WO 2009/103651 A2 sind kationische Nanopartikel mit drei verschiedenen kovalent angebundenen Gruppen bekannt.

Ferner sind aus DE 10 2008 010346 A1 UV-härtbare Zusammensetzungen, enthaltend aromatische Epoxyacrylat, aliphatische Epoxyacrylat oder aliphatisches Polyesteracrylat, bekannt.

Die WO 2008/068154 A2 beschreibt ein Verfahren zur Oberflächenmodifizierung von anorganischen und organischen Substraten.

Aus WO 2006/108520 A1 sind mehrschichtige Erzeugnisse mit einer ersten und zweiten Schicht bekannt, wobei die erste Schicht eine UV-Schutzschicht auf Basis von Polyalkyl(meth)acrylat) enthält und die zweite Schicht Polycarbonat enthält.

Ferner ist aus US 2004/038036 A1 ein Verfahren zur Herstellung von überlackierbarem Substrat bekannt, wobei zunächst ein Basislack auf die Oberfläche aufgebracht wird, enthaltend ein Polyolacrylat Monomer und Epoxyacrylat Monomer.

Aus WO 02/24344 A2 ist ein Verfahren zur Beschichtung eines metallischen Bundes bekannt, wobei auf die Korrosionsschutzschicht eine lackähnliche Polymer-haltige Schicht aufgebracht wird.

Lösung

Überraschend hat sich gezeigt, dass die Oberflächenmodifizierung von Siliciumdioxiden mit mehrfachbindungenenthaltenden Organopolysiloxanen zu Produkten führt, welche hervorragend als Mattierungsmittel von UV-Lacken, UV-Überdrucklacken und Druckfarben, insbesondere UV härtenden Klarlacken geeignet sind.

Neben UV-Lacken, welche besonders schwierig zu mattieren sind, können auch alle anderen Lacksysteme mit den erfindungsgemäßen Produkten hervorragend mattiert werden.
Es wurde nun gefunden, daß sich die erfindungsgemäßen UV-härtenden Lacke auch hervorragend als Druckfarben und als UV-Überdrucklacke verwenden lassen.

Die erfindungsgemäßen UV härtenden Überdrucklacke weisen auf Grund der neuen erfindungsgemäßen Mattierungsmittel weiterhin den Vorteil auf, dass sie insbesondere in flüssigem Zustand eine verbesserte Transparenz im Vergleich zu UV-Lacken, mattiert mit einem PE-Wachs gecoateten Siliciumdioxid, aufweisen. Dabei sind die Sedimentationseigenschaften der polysiloxanmodifizierten Siliciumdioxide mindestens gleich gut wie die der Polyethylenwachs (PE-Wachs) modifizierten Siliciumdioxide. Somit weisen die erfindungsgemäß verwendeten, mit Mehrfachbindungen enthaltenden Polysiloxanen beschichteten Kieselsäuren, Vorteile gegenüber mit PE-Wachsen belegten Mattierungsmitteln, welche häufig eine Trübung des Klarlacks verursachen, auf.

Es wurde herausgefunden, dass Siliciumdioxide durch Beschichtung mit den Mehrfachbindungen enthaltenden Organopolysiloxanen derart modifiziert werden können, dass UV-Lacke, mit einem Brechungsindex im Bereich von 1.4000 bis 1.5000, in die die erfindungsgemäßen Siliciumdioxide eingearbeitet wurden, eine hervorragende Transparenz aufweisen. Im Vergleich zu UV-Lacken, die herkömmliche, mit PE-Wachs belegte Kieselsäuren als Mattierungsmittel enthalten, und einen Brechungsindex im Bereich von 1.4000 bis 1.5000 aufweisen, zeigen identische Lacke, die die erfindungsgemäßen Kieselsäuren als Mattierungsmittel enthalten, eine stark verbesserte Transparenz, auch in flüssiger Form, wobei die Sedimentationseigenschaften hervorragend sind. Mit herkömmlichen Mattierungsmitteln mattierte Klarlacke sind in flüssiger Form im allgemeinen trübe, wogegen die mit den erfindungsgemäßen Fällungskieselsäuren mattierten Klarlacke, auch in flüssiger Form weitgehend klar und transparent sind.

Gegenstand der vorliegenden Erfindung sind daher UV-Überdrucklacke und Druckfarben, bevorzugt UV härtende Klarlacke, umfassend zumindest ein oberflächenmodifiziertes Siliciumdioxid, welches sich dadurch auszeichnet, dass zumindest Teile der Siliciumdioxidpartikel mit zumindest einem Organopolysiloxan belegt sind und dass zumindest ein Organopolysiloxan zumindest eine Mehrfachbindung enthält, <u>das oberflächemodifizierte Siliciumdioxid einen C-Gehalt von 1 Gew.% - 20 Gew.-% aufweist, das Siliciumdioxid eine gefällte Kieselsäure oder pyrogene Kieselsäure ist und das Organopolysiloxan ein Silikonpolyetheracrylat-Polymer und/oder Silikonpolyethermethacrylat-Polymer ist..</u>

Gegenstand der vorliegenden Erfindung ist zudem ein Verfahren zur Herstellung der erfindungsgemäß verwendeten oberflächenmodifizierten Siliciumdioxide, welches dadurch gekennzeichnet ist, dass ein getrocknetes Siliciumdioxid oder eine Suspension eines Siliciumdioxids oder ein Filterkuchen mit zumindest einem Organopolysiloxan, welches zumindest eine Mehrfachbindung enthält, in Kontakt gebracht wird, <u>wobei das Siliciumdioxid eine gefällte Kieselsäure oder pyrogen Kieselsäure ist und das Organopolysiloxan ein Silikonpolyetheracrylat-Polymer und/oder Silikonpolyethermethacrylat-Polymer ist.</u>

Bei den erfindungsgemäß verwendeten oberflächenmodifizierten Siliciumdioxiden handelt es sich um gefällte Kieselsäuren; oder pyrogene Kieselsäuren . Der Unterschied zwischen den genanten Siliciumdioxidarten ist dem Fachmann bekannt und kann z. B. in Ullmanns Encyclopedia of Chemistry, 5. Auflage, Vol. 23 nachgelesen werden. Ganz besonders bevorzugt werden gefällte Kieselsäuren verwendet.

Die Begriffe gefällte Kieselsäuren und Fällungskieselsäuren werden im Rahmen der vorliegenden Erfindung synonym verwendet. Ebenso werden die Begriffe Organopolysiloxan und Polyorganosiloxan synonym verwendet.

Die erfindungsgemäß verwendeten Siliciumdioxide werden bevorzugt durch zumindest eine der folgende physikalisch-chemischen Parameter charakterisiert:

Es hat sich gezeigt, dass die DBP-Zahl der erfindungsgemäß verwendeten Siliciumdioxide in gewissem Umfang mit der Mattierungseffizienz korreliert werden kann. Zudem ist die DBP-Zahl wichtig, um eine optimale Aufnahme von Organopolysiloxan zu gewährleisten. Die DBP-Zahl der erfindungsgemäß verwendeten Siliciumdioxide liegt daher bevorzugt im Bereich von 100 g/100g bis 600 g/100g, besonders bevorzugt 150 g/100g bis 500 g/100g, ganz besonders bevorzugt 200 bis 450 g/100g und speziell bevorzugt 250 g/100g bis 400 g/100g.

Um eine besonders gute Mattierungswirkung erzielen zu können, gleichzeitig aber auch eine nicht zu raue Lackoberfläche zu ermöglichen, liegt die mittlere Partikelgröße $d_{50}$ der erfindungsgemäß verwendeten oberflächenmodifizierten Siliciumdioxide bevorzugt im Bereich von 1 $\mu$m bis 50 $\mu$m, besonders bevorzugt 1 $\mu$m bis 40 $\mu$m, ganz besonders bevorzugt von 1 $\mu$m bis 30 $\mu$m, speziell bevorzugt von 2 $\mu$m bis 20 $\mu$m und ganz speziell bevorzugt von 3 $\mu$m bis 15 $\mu$m. Die mittlere Partikelgröße kann je nach Schichtdicke des Überdrucklackes variiert werden.

Die Oberflächenmodifizierung wirkt sich auf das Absetzverhalten der erfindungsgemäß verwendeten oberflächenmodifizierten Siliciumdioxide aus. Es hat sich gezeigt, dass es besonders vorteilhaft ist, wenn der Kohlenstoff-Gehalt der erfindungsgemäß verwendeten oberflächenmodifizierten Siliciumdioxide im Bereich von 1 Gew.-% bis 10 Gew.-%, besonders bevorzugt von 2 Gew.-% bis 8 Gew.-% liegt.

Als oberflächenmodifizierende Organopolysiloxane werden Mehrfachbindungen enthaltende, bevorzugt zumindest eine Kohlenstoff- Kohlenstoff Doppel- und/oder Dreifachbindung enthaltende, Organopolysiloxane verwendet. Ohne an eine bestimmte Theorie gebunden zu sein, sind die Erfinder der Ansicht, dass die Mehrfachbindungen bei der UV Härtung mit vernetzt werden, was sich positiv auf die Mattierungswirkung auswirkt.

Erfindungsgemäß werden Silikonpolyetheracrylat-Polymere oder Silikonpolyethermethacrylat-Polymere verwendet. Besonders bevorzugt werden Acrylsäureester und/oder Methacrylsäureester von hydroxyfunktionellen Siloxanen und/oder polyalkylenmodifizierten Siloxanen verwendet. Insbesondere bevorzugt werden Organopolysiloxane verwendet, welche durch Ver- oder Umesterung von Acrylsäure und/oder Methacrylsäure oder Acrylsäureestern und/oder

Methacrylsäureestern in Anwesenheit eines die Ver- oder Umesterung katalysierenden Enzyms mit hydroxyfunktionellen und/oder polyoxyalkylenmodifizierten Siloxanderivaten der allgemeinen Formel (I)

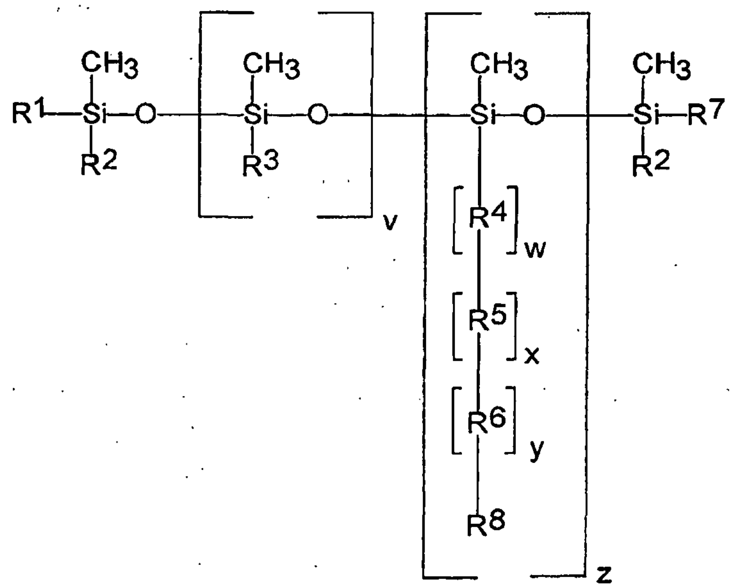

(I)

wobei gilt:

$R^1$ und/oder $R^7 = R^2$ oder $[R^4]_w$-$[R^5]_x$-$[R^6]_y$-$R^8$,
$R^2 = R^3$ oder $\neq R^3$ für gleiche oder verschiedene Alkylreste oder Alkylenreste mit 1 bis 24 Kohlenstoffatomen oder gegebenenfalls substituierte Phenylreste mit bis zu 24 Kohlenstoffatomen steht,
$R^4$ = ein zweiwertiger Rest der Formel O, NH, $NR^2$, S oder ein Rest der Formel $(OSi(CH_3)_2)_u$, wobei u = 1 bis 200,
$R^5$ = gleiche oder verschiedene Alkylreste oder Alkylenreste mit 1 bis 24 Kohlenstoffatomen, oder $C_nH_{2n-f}R^2{}_f$-$R^4$-$C_mH_{2m-g}R^2{}_g$, wobei gilt:

f = 0 bis 12,
g = 0 bis 12,
n = 1 bis 18,
m = 1 bis 18,
$R^6$ = O-$(C_2H_{4-a}R^2{}_aO)_b(C_cH_{2c}O)_d$, wobei gilt:

a = 0 bis 3,
b = 0 bis 100,
c = 2 bis 12,
d = 0 bis 100,
die Summe (b + d) = 1 bis 200 ist
und die Reihenfolge der einzelnen Polyoxyalkylensegmente $(C_2H_{4-a}R^2{}_aO)_b$ und $(C_cH_{2c}O)_d$ beliebig sein kann und insbesondere Blockcopolymere, wie statistische Polymere sowie deren Kombinationen, umfaßt, oder
$R^6 = O_e$-$C_hH_{2h}$-$C_iH_{2i-j}R^9{}_j$, wobei gilt:

e = 0 oder 1,
h = 0 bis 24,
i = 0 bis 24,
j = 1 bis 3,
die Summe (w + e) = 0 bis 1 ist
und $R^9$ jeweils ein zweiwertiger Rest der Formel O, eine Hydroxygruppe, ein Rest der Formel $C_hH_{2h}$ oder ein Rest der Formel $C_kH_{2k-l}(OH)_l$ bedeutet, wobei

k = 0 bis 24 und

l = 1 bis 3 ist,

$R^8$ = ein Wasserstoffrest oder ein einwertiger organischer Rest ist, wenn y gleich 1 ist, wobei pro Molekül mindestens ein Wasserstoffrest vorhanden sein muß, oder eine OH-Gruppe oder ein einwertiger organischer Rest, wenn y = 0, wobei pro Molekül mindestens eine OH-Gruppe vorhanden ist,

v = 0 bis 200,
w = 0 oder 1,
x = 0 oder 1,
y = 0 oder 1,
z = 0 bis 200

und die Summe (w + x + y) = 1 bis 3
und wenn z = 0 ist, $R^1$ und/oder $R^7$ gleich
$[R^4]_w$-$[R^5]_x$-$[R^6]_y$-$R^8$ ist
und wenn x = 0 dann auch w = 0 ist,
erhalten werden.

Es ist dem Fachmann geläufig, daß die Verbindungen in Form eines Gemisches mit einer im Wesentlichen durch statistische Gesetze geregelten Verteilung vorliegen. Insbesondere die Werte für die Indices b, d, u, v und z stellen deshalb Mittelwerte dar.

Beispiele von Siloxanderivaten, die erfindungsgemäß durch enzymatisch katalysierte Ver- oder Umesterung von Acryl- und/oder Methacrylsäure oder Acryl- und/oder Methacrylsäureestern umgesetzt werden können, sind:

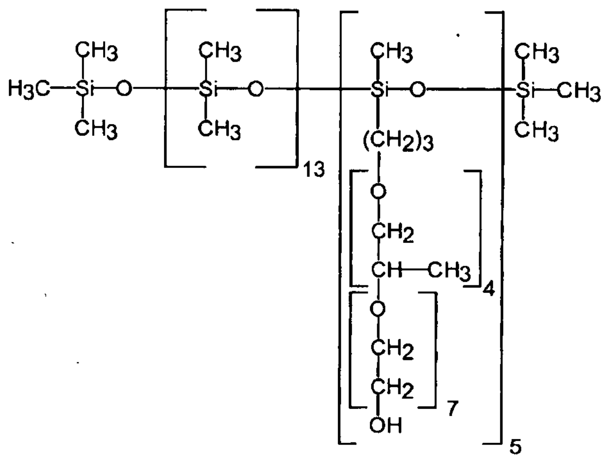

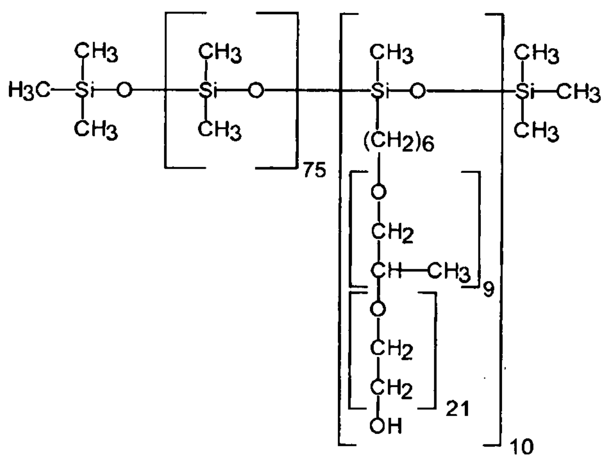

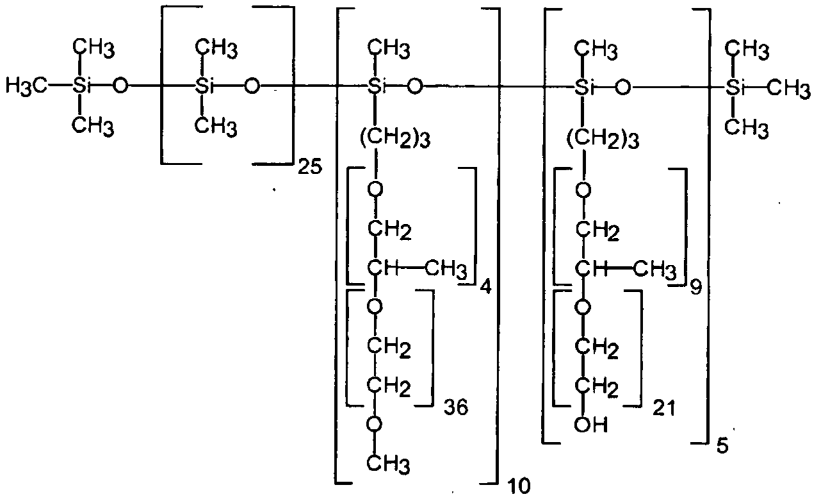

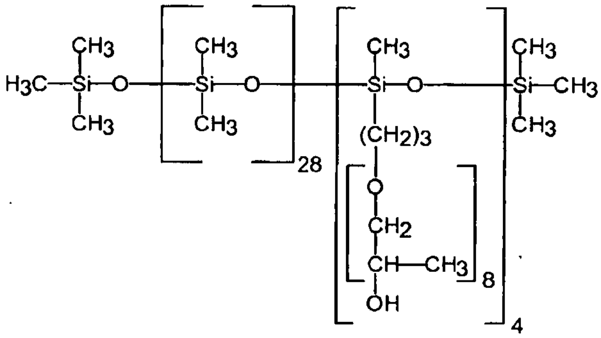

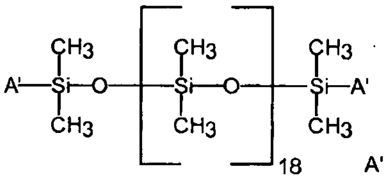

A' = $(CH_2)_3-(OCH_2CH_2)_{12}-(OCH_2CHCH_3)_6-OH$

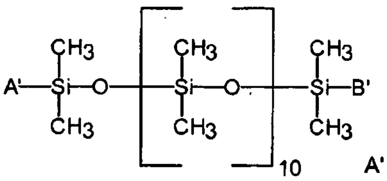

A' = $(CH_2)_3-(OCH_2CH_2)_{12}-(OCH_2CHCH_3)_6-OH$

B' = $(CH_2)_3-(OCH_2CH_2)_6-(OCH_2CHCH_3)_{14}-OCH_3$

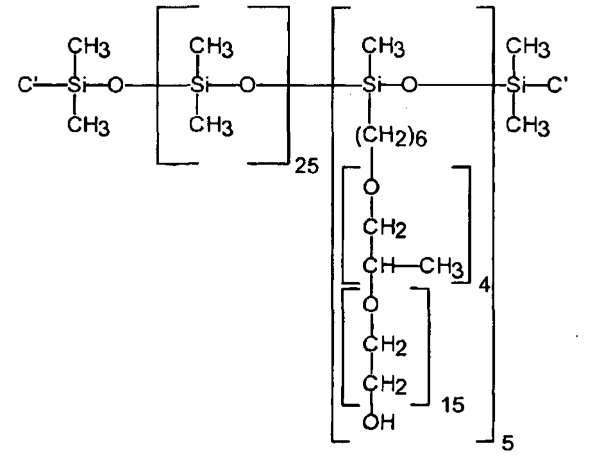

$C' = (CH_2)_3-(OCH_2CHCH_3)_4-(OCH_2CH_2)_{15}-OH$

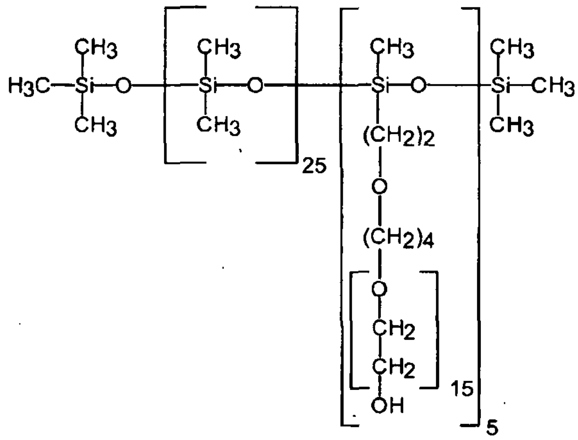

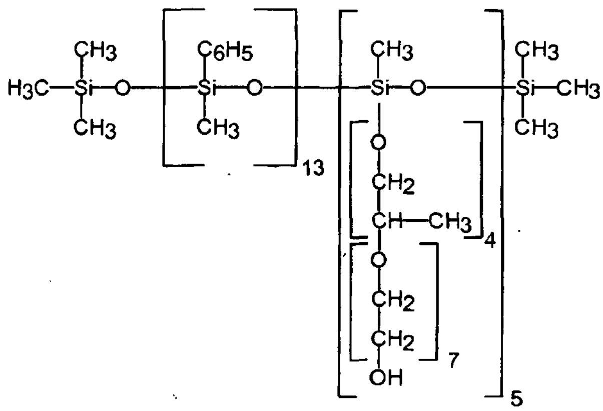

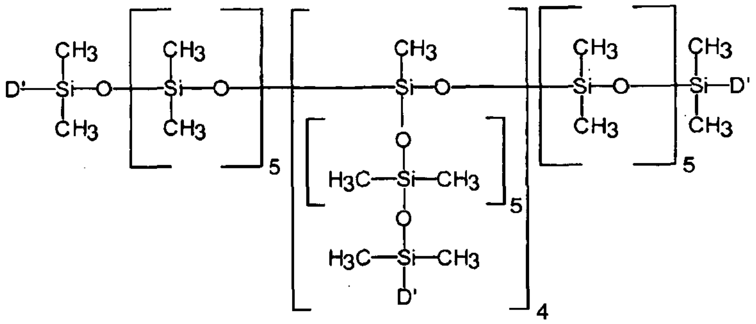

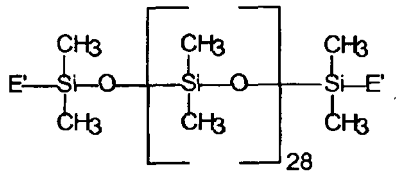

$D'=(O(CH_2CHCH_3)_6-(OCH_2CH_2)_{20}-OH$

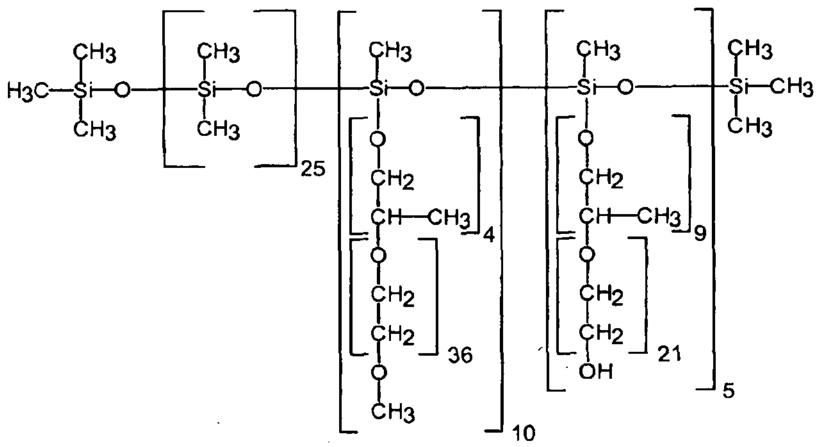

$E'=(O(CH_2)_4)_5-(OCH_2CH_2)_3-OH$

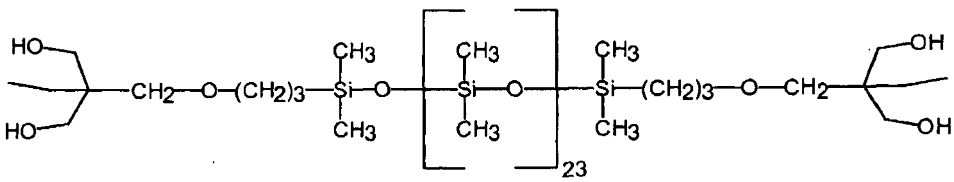

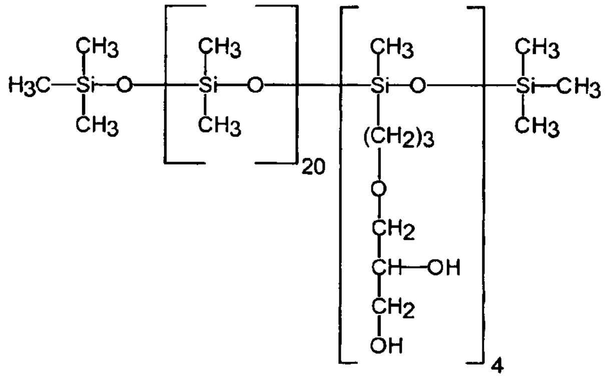

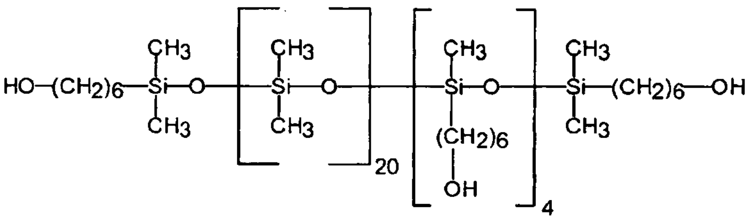

Die enzymatische Ver- oder Umesterung von Acryl- und/oder Methacrylsäure oder Acryl- und/oder Methacrylsäureestern mit den oben genannten Verbindungen bei niedrigen Temperaturen, insbesondere 20 Grad C bis 100 Grad C, bevorzugt 40 Grad C bis 70 Grad C und milden Bedingungen, ist vorteilhaft aufgrund der helleren Farbe des Produkts, der Vermeidung der Bildung von Nebenprodukten, die andernfalls zum Beispiel von chemischen Katalysatoren stammen können, der unkomplizierten Entfernung des Enzymkatalysators vom Produkt und der Vermeidung unerwünschter und unkontrollierter radikalischer Polymerisation der Acryl- und/oder Methacryloylverbindungen.

Die auf diese Weise erhältlichen acryloyl- und/oder methacryloylfunktionellen Siloxanderivate zeichnen sich dadurch aus, dass 5 % bis 100 % aller ursprünglich vorhandenen Hydroxygruppen zu einem Acryl- und/oder Methacrylsäureester umgesetzt worden sind.

Die Acrylierung und/oder Methacrylierung verläuft am besten in hohen Ausbeuten mit Estern der Acryl- und/oder Methacrylsäure als Donormoleküle, insbesondere Methyl-, Ethyl- oder Butylmethacrylat und/oder -acrylat.

Enzyme, die bevorzugt als Katalysatoren eingesetzt werden können, sind Hydrolasen, insbesondere Esterasen, Lipasen und Proteasen. Ein konkretes Beispiel hierfür ist Novozym® 435. Die Enzyme können in reiner Form oder in immobilisierter Form auf einem Träger, auf dem sie chemisch oder physikalisch gebunden sind, eingesetzt werden. Die Menge des Enzymkatalysators beträgt insbesondere, bezogen auf das eingesetzte modifizierte Siloxan, 0,1 Gew.-% bis 20 Gew.-%, vorzugsweise 1 Gew.-% bis 10 Gew.-%. Die Reaktionszeit hängt von der verwendeten Menge und der Aktivität des Enzymkatalysators ab und beträgt beispielsweise bis zu 48 Stunden, vorzugsweise bis zu 24 Stunden.

Um unter einfachen Reaktionsbedingungen schnell zu hohen Umsetzungsgraden zu kommen, ist es vorteilhaft, einen Überschuß von wenigstens 10 Gew.-% Acrylsäure bzw. Methacrylsäure und/oder deren entsprechenden Estern (als Donoren) in der Reaktionsmischung zu verwenden.

Das Produktionssystem lässt sich entweder durch einen Rührkesselreaktor oder einen Festbettreaktor charakterisieren. Der Rührkesselreaktor kann mit einer Vorrichtung zum Abdestillieren des aus dem Acryl- und/oder Methacrylsäuredonor freigesetzten Alkanols beziehungsweise des aus der Acrylsäure und/oder Methacrylsäure freigesetzten Wassers ausgestattet sein.

Die Reaktion wird vorzugsweise durchgeführt bis der gewünschte Umsatz erreicht wird. Eine Reaktionsführung mit gleichzeitiger Destillation wird bevorzugt, weil die Entfernung des Reaktionswassers bzw. Reaktionsalkanols zu höheren Umsätzen in kürzeren Reaktionszeiten aufgrund der Verschiebung des Reaktionsgleichgewichts führt.

Um möglichst hohe Umsetzungsgrade zu erreichen, ist die Entfernung des Reaktionswassers bzw. -alkanols zu empfehlen.

Nach beendeter Umsetzung kann der Enzymkatalysator durch geeignete Maßnahmen, wie Filtrieren oder Dekantieren, abgetrennt werden und gegebenenfalls mehrmals eingesetzt werden.

Der Festbettreaktor ist mit immobilisierten Enzymen bestückt, wobei die Reaktionsmischung durch die mit Katalysator gefüllte Säule gepumpt wird. Mit einem auf einem Träger immobilisierten Enzym ist es auch möglich, die Reaktion in einem Wirbelbett durchzuführen.

Die Reaktionsmischung kann kontinuierlich durch die Säule gepumpt werden, wobei mit der Fließgeschwindigkeit die Verweilzeit und damit der gewünschte Umsatz zu steuern ist. Es ist auch möglich, die Reaktionsmischung im Kreislauf durch die Säule zu pumpen, wobei auch unter Vakuum das Reaktionswasser bzw. -alkanol gleichzeitig abdestilliert werden kann.

Andere Methoden zur Entfernung des Reaktionswassers bzw. -alkanols können auch verwendet werden, z. B. Absorption oder Pervaporation.

In einer spezielle Ausführungsform der vorliegenden Erfindung zeichnen sich die Organopolysiloxane dadurch aus, dass sie einen Polyetherüberschuss von 5 Gew.-% bis 50 Gew.-%, bevorzugt 5 Gew.-% bis 40 Gew.-%, besonders bevorzugt 10 Gew.-% bis 30 Gew.-% und ganz besonders bevorzugt 10 Gew.-% bis 20 Gew.-% aufweisen. Diese Organopolysiloxane wirken sich besonders positiv auf die rheologischen Eigenschaften der UV-Überdrucklacke aus und können ebenfalls nach dem oben beschriebenen Verfahren hergestellt werden.

Die erfindungsgemäß verwendeten oberflächenmodifizierten Siliciumdioxide zeichnen sich in einer speziellen Ausführungsform unter anderem dadurch aus, dass sie die Transmission eines UV härtenden Klarlacks, mit einem Brechungsindex von $n_D20$ = 1.4000 bis 1.5000, enthaltend 5 Gew. % dieses modifizierten Siliciumdioxids, im Vergleich zu einem identischen UV-Lack enthaltend 5 Gew. % einer mit einem Polyethylenwachs behandelten Referenz-Siliciumdioxids um mindestens 20 % verbessern. Bevorzugt wird die Transmission um mindestens 25 %, insbesondere 30 % verbessert. Bei dem mit Polyethylenwachs behandelten Referenz-Siliciumdioxid handelt es sich bevorzugt um ACEMATT® OK 607, ein Handelsprodukt der Firma Evonik Degussa, mit einer Spezifikation gemäß Produktinformation von 12/02, welche hiermit ausdrücklich in den Inhalt der Beschreibung der vorliegenden Erfindung aufgenommen wird. Als Referenz-Siliciumdioxid können auch Siliciumdioxide, die das gleiche unbehandelte Siliciumdioxid aufweisen und mit einem Polyethylenwachs beschichtet sind, verwendet werden.

Gemäß der Produktinformation 12/02 weist ACEMATT® OK 607 folgende PC-Daten auf:

Tabelle 1:

| **Merkmale und Prüfmethoden** | **Einheiten** | **ACEMATT® OK 607** |
|---|---|---|
| Trocknungsverlust 2 h bei 105 °C in Anl. an DIN EN ISO 787-2 | % | 6 |
| Glühverlust [1)] 2 h bei 1000 °C in Anl. an DIN EN ISO 3262-1 | % | 13 |
| pH-Wert 5%ig in Wasser in Anl. an DIN EN ISO 787-0 | -- | 6 |
| Sulfat-Gehalt als $SO_4$ IR spektroskopisch Degussa Methode | % | 1 |
| Teilchengröße Mittelwert (TEM)<br>d50-Wert (Laserbeugung) | µm | 2<br>4.5 |
| Oberflächenbehandlung | | organisch |
| Stampfdichte nicht gesiebt in Anl. an DIN EN ISO 787-11 | g/l | 115 |
| Dichte in Anl. an DIN EN ISO 787-10 | $g/cm^3$ | 2.0 |
| Ölzahl in Anl. an DIN EN ISO 787-5 | g/100 g | 220 |
| $SiO_2$-Gehalt[2)] in Anl. an DIN EN ISO 3262-19 | % | 98 |
| 1) bezogen auf getrocknete Substanz<br>2) bezogen auf geglühte Substanz | | |

Die in Tabelle 1 genannten Werte sind Mittelwerte welche um die natürlichen Produktionsschwankungen bzw. Fehlergrenzen der Meßmethoden variieren können.

Zum Nachweis der verbesserten Transparenz kann im Prinzip jeder UV-Lack mit einem Brechungsindex im o.g. Bereich verwendet werden in den einmal ein erfindungsgemäßes Siliciumdioxid und einmal ein PE-Wachs gecoatetes Siliciumdioxid eingearbeitet wird.

Die erfindungsgemäß verwendeten Mattierungsmittel können nach einem Verfahren hergestellt werden, bei dem ein getrocknetes Siliciumdioxid oder eine Suspension des Siliciumdioxids oder ein Filterkuchen mit zumindest einem Organopolysiloxan enthaltend zumindest eine Mehrfachbindung in Kontakt gebracht wird, wobei das Siliciumdioxid

eine gefällte Kieselsäure oder pyrogen Kieselsäure ist und das Organopolysiloxan ein Silikonpolyetheracrylat-Polymer und/oder Silikonpolyethermethacrylat-Polymer ist.

Die vorliegende Erfindung umfasst somit sowohl Nass- als auch Trockencoatungsverfahren.

Ein bevorzugtes Verfahren umfasst zumindest einen der folgenden Schritte:

a) Umsetzen einer Alkalisilikatlösung mit einem Säuerungsmittel, bevorzugt unter alkalischen bis schwach sauren Bedingungen,
b) optional weitere Zugabe eines Säuerungsmittels zur Einstellung eines pH-Werts von 7 bis 2 unter Erhalt einer Siliciumdioxidsuspension,
c) optional Abfiltrieren des ausgefällten Feststoffs und
d) optional Trocknung des Feststoffs mittels Langzeittrocknung, z.B. Drehrohrtrockner oder Tellertrockner, oder mittels Kurzzeittrocknung, z.B. Sprühtrockner, Spinflashtrockner so, dass das Produkt eine Restfeuchte von kleiner 10 % aufweist,
e) behandeln des so erhaltenen Siliciumdioxids mit dem Organopolysiloxan.

In den Schritten a) und b) dieses erfindungsgemäßen Verfahrens wird als wässrige Alkalisilikatlösung bevorzugt Natriumsilikat (Wasserglas) mit einer Dichte von ca. 1.343 kg/l, mit einem Gewichtsanteil von ca. 27,3 % $SiO_2$ und ca. 7,9 % $Na_2O$ eingesetzt. Als Säuerungsmittel kann jede Mineralsäure, insbesondere konzentrierte Schwefelsäure (96 % $H_2SO_4$) oder $CO_2$, eingesetzt werden.

In Schritt a) können die Silikatlösung und das Säuerungsmittel, wie z. B. in DE 31 44 299 beschrieben, unter Rühren miteinander zur Reaktion gebracht werden. Der Inhalt der DE 31 44 299 ist Gegenstand der vorliegenden Erfindung. Optional kann die Zugabe des Säuerungsmittels bzw. des Säuerungsmittel zusammen mit Wasserglas in eine Wasser- oder Natriumsilikatvorlage erfolgen. Es sollte vorzugweise darauf geachtet werden, dass die Fällung unter Einhaltung eines schwach sauren bis alkalischen pH-Werts durchgeführt wird. Der pH-Wert beträgt insbesondere 6 - 12. Optional kann die Fällung bei konstantem pH-Wert oder konstanter Alkalizahl durchgeführt werden.

In Schritt b)
wird vorzugsweise durch Zugabe eines Säuerungsmittels, hier insbesondere das bereits zur Fällung eingesetzte Säuerungsmittel, ein pH-Wert im sauren oder neutralen Bereich (pH 7 bis 2) eingestellt.

In Schritt c)
kann das in der Suspension enthaltene Siliciumdioxid gegebenenfalls nach einer Wartezeit von 0 bis 90 Minuten, bevorzugt 15 bis 60 Minuten, abfiltriert und mit deionisiertem Wasser neutral gewaschen werden.

In Schritt d)
wird der Feststoff bevorzugt mittels Kurzzeittrocknung, z.B. Sprühtrockner, Spinflashtrockner oder Langzeittrocknung z.B. Drehrohrtrockner oder Tellertrockner so getrocknet, dass das Produkt eine Restfeuchte von kleiner 10 % aufweist.

Die Oberflächenmodifikation Schritt e) kann zu verschiedenen Zeitpunkten im oben beschriebenen Verfahren durchgeführt werden.

In einer Ausführungsform 1)
des erfindungsgemäßen Verfahrens werden in die in Schritt b) auf pH 7 - 2 eingestellte Siliciumdioxidsuspension, 0.5 Gew.-% bis 30 Gew.-% des oberflächenmodifizierenden Organopolysiloxans eingetragen. Die Zugabe erfolgt bevorzugt mit einer Dauer zwischen 1 und 30 Minuten, insbesondere 5 bis 15 Minuten, und wird bevorzugt bei der Reaktionstemperatur der Umsetzung in Schritt a), d. h. insbesondere bei 50 Grad C bis 90 Grad C, bevorzugt 50 Grad C bis 65 Grad C, durchgeführt. Anschließend wird das oberflächenmodifizierte Siliciumdioxid wie für die Schritte c) und d) beschrieben, abfiltriert und getrocknet.

In einer Ausführungsform 2)
der vorliegenden Erfindung wird das gemäß den Schritten a) und b) erhaltene Siliciumdioxid wie für Schritt c) beschrieben abfiltriert, gegebenenfalls mit deionisiertem Wasser gewaschen, danach erneut mit Wasser oder Schwefelsäure oder einem Gemisch aus Wasser und Schwefelsäure resuspendiert. Anschließend werden 0.5 Gew.-% bis 30 Gew.-% des oberflächenmodifizierenden Organopolysiloxans in die Suspension gegeben und die so erhaltene Suspension in einen Sprühtrockner gesprüht, so dass die Oberflächenmodifizierung während des Trocknungsvorgangs erfolgt. Daneben ist auch die gleichzeitige Eindüsung von Siliciumdioxidsuspension und Siloxan denkbar. Die Sprühtrocknung erfolgt bei 200 Grad C bis 500 Grad C, so, dass das Produkt eine Restfeuchte kleiner 10% aufweist. Der Feststoffgehalt der zu versprühenden Suspension kann bis zu 25 Gew.-% betragen.

In einer Ausführungsform 3)
des erfindungsgemäßen Verfahrens wird das Siliciumdioxid wie in den Schritten a)-d) beschrieben hergestellt und getrocknet. Anschließend wird das getrocknete Siliciumdioxid mit 0.5 Gew.-% bis 30 Gew.-% des oberflächenmodifizierenden Polymeren versetzt und innig vermischt. Die Zugabe des Polymeren erfolgt innerhalb von 0 bis 120 min, bevorzugt innerhalb von 0 bis 60 min, besonders bevorzugt innerhalb von 0 bis 30 min.
Die Mischung wird 0 h bis 2 h bei 20 Grad C bis 150 Grad C weiter gemischt.

Bevorzugt erfolgt die Mischung bei 20 Grad C bis 100 Grad C, besonders bevorzugt bei 20 Grad C bis 80 Grad C. Der Mischvorgang wird bevorzugt 0 h bis 1 h und besonders bevorzugt 0 min bis 30 min durchgeführt.

Optional kann bei Ausführungsform 1) und 2) noch ein Emulgierhilfsmittel wie z. B. LA-S 687 (Firma EVONIK TEGO Chemie GmbH) zugegeben werden. Dies ist insbesondere bei Organosiliziumverbindungen, die nicht wasserlöslich sind, angezeigt.

Zur Erreichung der gewünschten Partikelverteilung ist es in den Ausführungsformen 1 bis 3 empfehlenswert, dass nach der Trocknung der oberflächenmodifizierten Kieselsäuren eine Vermahlung bevorzugt bei gleichzeitiger Sichtung durchgeführt wird. Diese Vermahlung kann in handelsüblichen Querstrommühlen (z.B. der Firma Alpine, Firma Netzsch-Condux) durchgeführt werden.

Zur Vermeidung von Oberkorn bzw. Stippen ist es zweckmäßig, nach der Trocknung der oberflächenmodifizierten Fällungskieselsäuren oder nach oder während der Vermahlung in Partikel mit einem Durchmesser über 50 $\mu$m, bevorzugt über 30 $\mu$m, insbesondere über 20 $\mu$m abzutrennen. Dies kann je nach Feinheit des Mattierungsmittels z. B. durch ein entsprechendes Sieb oder eine Sichtereinrichtung, die auch in die Mühle integriert sein kann, erfolgen.

Neben den zuvor beschriebenen Verfahrensvarianten 1 bis 3 umfasst die vorliegende Erfindung auch ein Verfahren, bei dem die Oberflächenmodifikation in Form einer Mahlcoatung durchgeführt wird. Dieses Verfahren zeichnet sich dadurch aus, dass ein gefälltes Siliciumdioxid oder ein pyrogenes Siliciumdioxid in einer Mahlapparatur, bevorzugt einer Strahlmühle, gleichzeitig vermahlen und oberflächenmodifiziert wird. Vorzugsweise wird dazu eine Ovalrohrmühle oder eine Spiralstrahlmühle mit statischer Sichtung oder alternativ eine Fliessbettgegenstrahlmühle oder eine Dichtbettstrahlmühle, besonders bevorzugt mit einem dynamischen Windsichter, verwendet. Ganz besonders bevorzugt wird eine Strahlmühle mit integriertem Sichter wie sie in der DE 10 2006 048850 beschrieben wird, verwendet. Dem Fachmann ist bekannt, wie eine solche Mühle betrieben und das Coatungsmittel eingedüst werden kann.

Es hat sich als besonders vorteilhaft erwiesen, wenn das Mahlgas einen Druck von $\leq$ 4 bar(abs) und/oder eine Temperatur von kleiner gleich 180 Grad C, bevorzugt kleiner 100 Grad C aufweist.

Das Trockencoatungsverfahren hat gegenüber den zuvor beschriebenen Nasscoatungsverfahren insbesondere dann Vorteile, wenn Organopolysiloxane verwendet werden, welche einen 5 Gew.-% bis 50 Gew.-%, bevorzugt 5 Gew.-% bis 40 Gew. %, besonders bevorzugt 10 Gew.-% bis 30 Gew.-% und ganz besonders bevorzugt einen 10 Gew.-% bis 20 Gew. % Überschuss an Polyether aufweisen.

Dieser Polyether wird bei den Nasscoatungsverfahren zum großen Teil ausgewaschen. Beim Trockencoatungsverfahren wird der Polyether hingegen weitgehend bis vollständig mit auf dem Siliciumdioxid abgeschieden. Man erhält somit Produkte mit unterschiedlichen Eigenschaften, wo die erfindungsgemäßen Polyether enthaltenden Produkte den Lacken vorteilhafte rheologische Eigenschaften verleihen.

Als oberflächenmodifizierende Organopolysiloxane können die oben näher beschriebenen Substanzen verwendet werden.

Im erfindungsgemäßen Herstellungsverfahren erfolgt die Zugabe der Organopolysiloxane bevorzugt so, dass während der Reaktion des Organopolysiloxans mit dem Siliciumdioxid ein Verhältnis von Organopolysiloxan zu Siliciumdioxid von 0.5 g : 100 g bis 30 g : 100 g, insbesondere von 2 g : 100 g bis 20 g : 100 g, speziell 3 g : 100 g bis 13 g : 100 g eingestellt wird.

Die Oberflächenmodifikation kann wie zuvor beschrieben vor, während oder nach einer Vermahlung oder Trocknung erfolgen. Das Oberflächenmodifizierungsagens kann dabei unverdünnt als Reinsubstanz oder in verdünnter Form als wässrige Emulsion zugegeben werden.
Die Menge und die Art des Organopolysiloxans wird in einer speziellen Ausführungsform so gewählt, dass das modifizierte Siliciumdioxid die Transmission eines UV-Klarlackes, mit einem Brechungsindex von $n_D20$ = 1,4000 bis 1,5000, enthaltend 5 Gew. % dieses modifizierten Siliciumdioxids, im Vergleich zu einem identischen Lack enthaltend 5 Gew. % einer mit einem Polyethylenwachs behandelten Referenz-Siliciumdioxids, um mindestens 20 % verbessert.

UV härtende Überdrucklacke im Sinne der vorliegenden Erfindung gehen nach Bestrahlung mit UV-Licht über eine chemische Reaktion, bevorzugt innerhalb von Sekundenbruchteilen, in einen festen Zustand über. Dabei wird ein fester und trockener Film ausgebildet. Es können alle dem Fachmann bekannten UV-Lacksysteme bzw. Komponenten von UV-Lacksystemen verwendet werden, sofern die oben näher beschriebenen organopolysiloxanmodifizierten Siliciumdioxide als Mattierungsmittel enthalten sind.

Beispiele für Literaturstellen in denen entsprechende Zusammensetzungen nachgelesen werden können sind: Petry V. (20.04.2004): What ist he influence of photoinitiators on matting of UV-cured coatings? Fatipec [Hrsg](2004) und BASF AG (1999): The hart of coatings - Laromer und Lucirin Rohstoffe für Strahlungshärtung sowie Meichsner, G. (2003): Grundlagen der UV-Härtung In: Meichsner, G. [Hrsg] (2003) Spezielle Technologie UV - Vorlesungsscript und ferner K.P. Schottenloher: Mattierung von strahlungshärtenden Lacken, Diplomarbeit HS-Esslingen (2004).

Die UV-härtenden Lacke der vorliegenden Erfindung umfassen reaktive Monomere bzw. Oligomere als Bindemittel. Bevorzugt sind Acrylate, Methacrylate oder substituierte Acrylate oder substituierte Methacrylate oder ungesättigte Polyesterharze, bevorzugt werden als Bindemittel Epoxy-, Polyester-, Polyether-, Oligoether- oder Polyurethanacrylate oder Polyurethanmethacrylate verwendet.

Als besonders geeignete Acrylpolymere haben sich auch Copolymere auf Basis von Acrylat, Methacrylat und/oder akylsubstituierten Derivaten davon herausgestellt. Diese Acrylpolymere können also z. B. Copolymere von Acrylat mit Methacrylat sein oder Copolymere von Acrylat mit alkylsubstituierten Derivaten von Acrylat oder Methacrylat. Besonders geeignet sind auch Copolymere von Methylacrylat mit alkylsubstituierten Derivaten des Methacrylats. Ein besonders geeignetes Copolymer ist z.B. eines aus Methylmethacrylat und Methylacrylat (Plex 8671 F, Evonik Röhm GmbH). Als Acrylpolymer für die erfindungsgemäße Zusammensetzung eignen sich selbstverständlich auch Mischungen der zuvor genannten Copolymere.

Neben dem Bindemittel und dem Mattierungsmittel können die erfindungsgemäßen UV-Überdrucklacke Hilfsstoffe wie z. B. Fotoinitiatoren, Verlaufsmittel, Antioxidantien, Netzmittel, wie beispielsweise BYK 2900, Pigmente, mikrokristalline Wachse, organische Lösemittel oder Wasser enthalten.

Photoinitiatoren bilden bei Belichtung Radikale und induzieren eine Polymerisation. Als Photoinitiator wird im erfindungsgemäßen UV-härtenden Überdrucklack vorzugsweise Benzophenon verwendet. Für die erfindungsgemäße Zusammensetzung können jedoch auch andere bekannte Photoinitiatoren ausgewählt werden. Ferner können aus der Klasse der $\alpha$-Hydroxyketone bzw. deren Derivate, vorzugsweise Hydroxycyclohexylphenylketon, verwendet werden. Kommerziell erhältlich sind diese Photoinitiatoren z.B. als Irgacure 184, Irgacure 500, Irgacure 2959 oder Darocure 1173, (Ciba Specialty Chemicals, Basel). Zum Beispiel sind auch $\alpha$ -Aminoketone, Acylphosphinoxide und deren jeweiligen Derivate als solche Initiatoren geeignet.

Die erfindungsgemäße UV-härtende Zusammensetzung kann mindestens ein organisches Lösungsmittel enthalten, wobei als Lösungsmittel zahlreiche für solche Zusammensetzungen üblicherweise bekannten Lösungsmittel in Frage kommen, z.B. Terpene, Alkane, Aromaten, Alkohole, Ketone, Ester, Ether oder Mischungen davon. Bevorzugt Lösungsmittel sind Ethanol, Butylacetat, Isopropanol, Isobutanol, Methoxypropanol, Methylethylketon, oder Mischungen davon.

Die Menge des verwendeten Lösungsmittels in der Zusammensetzung kann in den üblichen Grenzen frei variiert werden und wird üblicherweise unter Berücksichtigung der erforderlichen Rheologie und Filmbildung bei der jeweiligen Applikation und den anwendungsspezifischen Abluft- und Trocknungsbedingungen vor der UV-Härtung eingestellt.

Die erfindungsgemäße Zusammensetzung kann auch mindestens ein Verlaufsadditiv enthalten, beispielsweise Byk 3510, ein polyethermodifiziertes Polydimethylsiloxan, welches vorzugsweise mit einem Gewichtsanteil von bis zu 0,6 Gew.-% bis 1,2 Gew.-% verwendet werden kann.

Die erfindungsgemäße UV-härtende Zusammensetzung kann auch in Abhängigkeit der jeweiligen Bedingungen während des Beschichtungsvorganges mindestens ein Entschäumeradditiv enthalten. Entschäumer sind in der Regel ionische oder nicht ionische Tenside und können zur Verbesserung der Filmbildung beitragen. Ein beispielhafter Entschäumer ist Byk 088, eine Kombination von schaumzerstörenden Polymeren und Polysiloxanen, welches zur Reduzierung bzw. zur Vermeidung störender Lufteinschlüsse im Beschichtungsmaterial mit 0,1 Gew.-% bis 0,5 Gew.-% eingesetzt wird.

Die erfindungsgemäßen UV-Überdrucklacke enthalten bevorzugt 3 Gew.-% bis 30 Gew. %, bevorzugt 5 Gew.-% bis 20 Gew. % und ganz besonders bevorzugt 8 Gew.-% bis 15 Gew. % der organopolysiloxan modifizierten Siliciumdioxide.

Wie zuvor bereits angedeutet können die in den erfindungsgemäßen UV-Lacken verwendeten und oben näher beschriebenen oberflächenmodifizierten Siliciumdioxide zur Mattierung unterschiedlicher Lackarten wie z. B. Möbellacke, Malerlacke, Coil Coatings, CN-Lacke oder UV-Überdruckfarben oder Druckfarben eingesetzt werden.

Die physikalisch/chemischen Daten der erfindungsgemäßen Fällungskieselsäuren wurden mit den folgenden Methoden bestimmt:

**Bestimmung der Transmission von Lacken**

Die Messung der Transmission erfolgte mit einem UV/Vis-Spektralphotometer Specord 200 der Fa. ANALYTIK JENA GmbH in 1 cm Quarzküvetten bei Raumtemperatur gegen Luft als Referenz. Die Spaltbreite und Schrittweite betrug 2 nm.

Dazu wird ein UV-Lack mit einem Brechungsindex $n_D20$ = 1.4000 bis 1,5000 vorgelegt und 2.5 g des jeweiligen Mattierungsmittels (oberflächenmodifiziertes Siliciumdioxid) eingearbeitet. Hierbei wird das Mattierungsmittel bei Raumtemperatur mit einem Flügelrührer für 10 Min. bei 2.000 Umdrehungen/Min. in 50 g des UV-Lackes dispergiert. Die Dispergierung erfolgte in einem 180 ml PE Mischbecher bei Raumtemperatur. Die Flügeldurchmesser des Rührers betragen 43 mm. Anschließend wird die frisch zubereitete Dispersion in 1 cm Quarzküvetten gefüllt und UV/Vis-Spektren, in Transmission zwischen 190 nm und 1.100 nm registriert.

**DBP-Aufnahme**

Die DBP-Aufnahme (DBP-Zahl), die ein Maß für die Saugfähigkeit des Siliciumdioxids ist, wird in Anlehnung an die Norm DIN 53601 wie folgt bestimmt:

Durchführung

12.50 g pulverförmiges oder kugelförmiges Siliciumdioxid mit 0 Gew.-% bis 10 Gew.-% Feuchtegehalt (gegebenenfalls wird der Feuchtegehalt durch Trocknen bei 105 °C im Trockenschrank eingestellt) werden in die Kneterkammer (Artikel Nummer 279 061) des Brabender-Absorptometer "E" gegeben. Im Falle von Granulaten wird die Siebfraktion von 3.15 bis 1 mm (Edelstahlsiebe der Fa. Retsch) verwendet (durch sanftes Drücken der Granulate mit einem Kunststoffspatel durch das Sieb mit 3,15 mm Porenweite). Unter ständigem Mischen (Umlaufgeschwindigkeit der Kneterschaufeln 125 U/min) tropft man bei Raumtemperatur durch den "Dosimaten Brabender T 90/50" Dibutylphthalat mit einer Geschwindigkeit von 4 ml/min in die Mischung. Das Einmischen erfolgt mit nur geringem Kraftbedarf und wird anhand der Digitalanzeige verfolgt.

Gegen Ende der Bestimmung wird das Gemisch pastös, was mittels eines steilen Anstieges des Kraftbedarfs angezeigt wird. Bei einer Anzeige von 600 digits (Drehmoment von 0.6 Nm) wird durch einen elektrischen Kontakt sowohl der Kneter als auch die DBP-Dosierung abgeschaltet. Der Synchronmotor für die DBP-Zufuhr ist mit einem digitalen Zählwerk gekoppelt, so dass der Verbrauch an DBP in ml abgelesen werden kann.

Auswertung

Die DBP-Aufnahme wird in g/100 g angegeben und anhand der folgenden Formel aus dem gemessenen DBP-Verbrauch berechnet. Die Dichte von DBP beträgt bei 20 °C typischer Weise 1.047 g/ml.

DBP-Aufnahme in g/100 g = Verbrauch an DBP in ml * Dichte des DBP in g/ml * 100 / 12.5 g

Die DBP-Aufnahme ist für das wasserfreie, getrocknete Siliciumdioxid definiert. Bei Verwendung von feuchten Siliciumdioxiden ist der Wert mittels der folgenden Korrekturtabelle zu korrigieren.

Der Korrekturwert entsprechend dem Wassergehalt wird zu dem experimentell bestimmten DBP-Wert addiert; z. B. würde ein Wassergehalt von 5.8 % einen Zuschlag von 33 g/100 g für die DBP-Aufnahme bedeuten.

**Tabelle 2: Korrekturtabelle für Dibutylphthalataufnahme - wasserfrei -**

| % Wasser | .% Wasser<br>.0 | .2 | .4 | .6 | .8 |
|---|---|---|---|---|---|
| 0 | 0 | 2 | 4 | 5 | 7 |
| 1 | 9 | 10 | 12 | 13 | 15 |
| 2 | 16 | 18 | 19 | 20 | 22 |
| 3 | 23 | 24 | 26 | 27 | 28 |
| 4 | 28 | 29 | 29 | 30 | 31 |
| 5 | 31 | 32 | 32 | 33 | 33 |
| 6 | 34 | 34 | 35 | 35 | 36 |
| 7 | 36 | 37 | 38 | 38 | 39 |
| 8 | 39 | 40 | 40 | 41 | 41 |
| 9 | 42 | 43 | 43 | 44 | 44 |
| 10 | 45 | 45 | 46 | 46 | 47 |

**Bestimmung der Feuchte von Siliciumdioxiden**

Nach dieser Methode werden in Anlehnung an ISO 787-2 die flüchtigen Anteile (im folgenden der Einfachheit halber "Feuchte" genannt) von Siliciumdioxiden nach 2 stündiger Trocknung bei 105 Grad C bestimmt. Dieser Trocknungsverlust besteht im Allgemeinen überwiegend aus Wasserfeuchtigkeit.

Durchführung

In ein trockenes Wägeglas mit Schliffdeckel (Durchmesser 8 cm, Höhe 3 cm) werden 10 g des pulverförmigen, kugelförmigen oder granulären Siliciumdioxids werden auf 0.1 mg genau eingewogen (Einwaage E). Die Probe wird bei geöffnetem Deckel 2 h bei 105 ± 2 Grad C in einem Trockenschrank getrocknet. Anschließend wird das Wägeglas verschlossen und in einem Exsikkatorschrank mit Kieselgel als Trocknungsmittel auf Raumtemperatur abgekühlt. Die Auswaage A wird gravimetrisch bestimmt.
Man bestimmt die Feuchte in % gemäß (E in g - A in g) * 100% / E in g.
Die Messung wird als Doppelbestimmung durchgeführt.

**Bestimmung des Glühverlusts:**

2 h bei 1000 °C nach Trocknung, DIN 55 921/3,4, ISO 3262

**Bestimmung des $d_{50}$**

**Aggregatgrößenverteilung durch Laserbeugung (Coulter)**

**Geräte:**

Laserbeugungsgerät LS 230, Fa. Coulter
Utraschallfinger Bandelin, Typ HD 2200 mit Horn DH 13 G
Kühlbad 80 ml
Eppendorfpipette 5 ml
Zentrifugenglas, Höhe 7 cm, Ø 3 cm
Petrischale, Höhe 4 cm, Ø 7 cm
Dewar-Gefäß, Höhe 21 cm, Ø 4 cm
Digitales Thermometer, Genauigkeit ± 0.1 K
Chemikal ien:
Ethanol, p.A., Fa. Merck
Triton X-100, Fa. Merck
Natriumhexametaphosphat, Fa. Baker

Probenvorbereitung:

Granulate werden in einen Mörser gegeben und die grobkörnigen Granulatstücke zerdrückt, nicht gemörsert.
1 g ungealtertes Siliciumdioxid (Zeitspanne zur Produktion max. 10 Tage) wird in ein 30 ml Rollrandgläschen eingewogen und mit 20 ml Dispersionslösung (20 g Natriumhexametaphosphat auf 1000 ml mit demineralisiertem Wasser aufgefüllt) versetzt. Anschließend wird die Probe in ein Kühlbad, welches die starke Erwärmung der Suspension verhindert, gestellt und 1 min mit Ultraschall behandelt (20 W-Leistung, 80 % Pulse). Je Kieselsäure werden nacheinander drei Dispersionslösungsmuster hergestellt.
Bis die Probenzugabe in das Flüssigkeitsmodul erfolgt, gibt man die Suspension in eine Petrischale mit Magnetrührer, um eventuelle Sedimentation zu verhindern.

Durchführung:

Vor Beginn der Messung lässt man das Gerät und das Flüssigkeitsmodul mindestens 30 min warmlaufen und spült das Modul (Menüleiste "Steuerung/Spülen") 10 min. automatisch.
In der Steuerleiste der Coultersoftware wählt man über dem Menüpunkt "Messungen" das Dateifenster "Opt. Modell berechnen" aus und legt die Brechungsindizes fest (Flüssigkeitsbrechungsindex Real = 1.332; Material Brechungsindex Real = 1.46, Imaginär = 0.1).
In dem Dateifenster "Messzyklus" stellt man die Leistung der Pumpgeschwindigkeit auf 26 % und die Ultraschallleistung auf 3 % ein. Die Punkte Ultraschall. "während der Probenzugabe", "vor jeder Messung" und "während der Messung" sind zu aktivieren.
Zusätzlich wählt man in diesem Dateifenster die folgenden Punkte aus:

Offsetmessung (1x täglich)
Justieren
Hintergrundmessung
Messkonzentration einstellen
Probeninfo eingeben
Messinfo eingeben
2 Messungen starten
Automatisches Spülen
Mit PIDS Daten

Nach Abschluss der Kalibrierung, erfolgt die Probenzugabe. Man fügt so lange dispergierte Kieselsäure zu, bis eine Lichtabsorption von ca. 45 % erreicht ist und das Gerät OK meldet.

Die Messung erfolgt mit dem Fraunhofer Modell, wobei die Standardsoftware des Laserbeugungsgerät LS 230, Fa. Coulter verwendet wurde.

Von jeder Probenzugabe werden drei Doppelbestimmungen von 60 Sekunden durchgeführt.

Aus der Rohdatenkurve berechnet die Software auf Basis der Volumenverteilung die Teilchengrößenverteilung.

**<u>Bestimmung des C-Gehalts</u>**

**Geräte:**

C-mat 500 der Fa. Ströhlein Instruments
Analysenwaage
Porzellanschiffchen mit Deckel
Pinzette
Dosierlöffel

Reagenzien

Euro-Analysen-Kontrollprobe 077-2 (Fa. Ströhlein Instruments)
Sauerstoff

Durchführung

Messung der Kontrollprobe

Zuerst wird die Kontrollprobe gemessen. Dazu werden auf ein ausgeglühtes, abgekühltes Porzellanschiffchen 0.14 - 0.18 g auf einer Analysenwaage eingewogen. Beim Bedienen der Starttaste wird das Gewicht übernommen, da die Waage mit dem C-mat gekoppelt ist. Das Schiffchen muß innerhalb von 30 Sekunden in die Mitte des Verbrennungsrohres geschoben werden. Nach Abschluß der Verbrennung wird der Meßwert in Impulse umgewandelt und vom Rechner ausgewertet. Es werden 2 und mehr Bestimmungen durchgeführt. Eventuell muß der Faktor des Gerätes neu eingestellt werden. Der Faktor wird nach folgender Formel berechnet:

$$\text{Faktor} = \frac{\text{Sollwert} * \text{Einwaage} * 100}{\text{Impulse}}$$

Messung der Siliciumdioxidproben

Nach der Ermittlung des Faktors werden die Siliciumdioxidproben gemessen. Dazu werden jeweils 0.04 - 0.05 g der Kieselsäure in ein Porzellanschiffchen eingewogen und das Porzellanschiffchen mit einem Porzellandeckel abgedeckt. Anschließend werden die Kieselsäureproben analog zur Kontrollprobe vermessen. Bei Abweichungen > 0.005%

wird eine dritte und ggf. weitere Messungen durchgeführt und der Durchschnitt errechnet.

Auswertung

Der Kohlenstoffgehalt wird nach folgender Formel berechnet:

$$\%C = \frac{I * F * 10^{-5}}{E * 1000}$$

Dabei bedeuten:

I = Impulse
F = Faktor
E = Einwaage in g

Ergebnisangabe

Das Ergebnis wird in 2 Nachkommastellen in %C abgegeben.

Anmerkung

Die Handhabung des "C-mat 500" kann der Bedienungsanleitung der Fa. Ströhlein Instruments entnommen werden.

**<u>Bestimmung der Reflektometerwerte</u>**

Grundlagen

Die Beeinflussung des Reflektionsvermögens durch gezielte Aufrauung von Lackfilmoberflächen ist die herausragende Eigenschaft von Mattierungskieselsäuren. Der Reflektometerwert ist somit ein wichtiges Kriterium zur Charakterisierung von mattierten Lackfilmen.

Prinzip

Mit dieser Methode werden direkte Aussagen über das Reflektionsvermögens und damit der Glanzcharakteristik der Lackfilmoberflächen getroffen, sowie indirekte Aussagen über den Grad deren Aufrauung.

Geräte

Reflektometer mit Meßgeometrie nach DIN 67530, geprüft nach DIN 67530 (z.B. Haze-gloss, BYK-Instruments).

Durchführung

Voraussetzung für die Messung ist, dass die zu messenden Lackfilmoberflächen plan, sauber und ausgehärtet sind.

Die Messung ist an mindestens 3 repräsentativen Stellen der Probe durchzuführen. Werden zu große Abweichungen der Einzelmessungen erzielt, sollte in der Regel eine erneute Messung an repräsentativen Stellen erfolgen oder die Anzahl der Einzelmessungen auf >3 erhöht werden. Am BYK Haze-gloss wird im Display die Standardabweichung der Messungen angezeigt. Ist die Standardabweichung s > 0,5 ist die Durchführung der o.g. Maßnahmen zu empfehlen.

Der Mittelwert ist auf 1 Dezimalstelle anzugeben.

Anmerkung zur Messgeometrie

Bei der Charakterisierung von mattierten Überdrucklackfilmoberflächen hat es sich bewährt, mit der 60°-Messgeometrie zu messen.

## Bestimmung der rheologischen Eigenschaften

Grundlagen

Mattierungsmittel auf Basis von Siliciumdioxiden verändern die rheologischen Eigenschaften von Lacken. Diese Veränderungen können sich im Aufbau von nicht-newton'schen Fließverhalten, wie Fließgrenzen, Strukturviskositäts- und Thixotropieeffekten, ausdrücken. Im Allgemeinen sind diese Effekte mit einem kugelgelagerten Rotationsviskosimeter messbar.

Bei ungenügender Präzision des kugelgelagerten Rotationsviskosimeters sind Messungen mit einem luftgelagerten Rotations- bzw. Oszillationsviskosimeter durchzuführen.

Geräte

Anton Paar
Messzylinder CC 27
Messzylinder CC 39
Einwegmessbecher
Steuer- und Auswertecomputer
Arbeitsvorschrift

Messsystem

Das koaxiale Zylinder-Messsystem besteht aus Messkörper, Einwegmessbecher und Messbecherhalter.

Es stehen 2 verschiedene Messkörper zur Verfügung.

| Messzylinder (Drehkörper) | Viskositätsbereich | Füllmenge |
|---|---|---|
| CC 27 | Mittel- bis hochviskose Lacke | 17 ml |
| CC 39 | Niedrig- bis mittelviskose Lacke | 65 ml |

## Messung der Transparenz / Density

Beim Einsatz von Mattierungsmitteln in transparenten Lacken kann in Abhängigkeit von dem eingesetzten Mattierungsmittel und dem Bindemittelsystem ein mehr oder weniger ausgeprägter Schleier auftreten, der dem transparenten Lackfilm einen bläulichen Unterton verleiht. Deshalb wird dieser Effekt auch Blauschleier genannt. Die analytischen Prüfdaten der Mattierungsmittel lassen keine Rückschlüsse auf diesen Effekt zu. Mit einem Densitometer bzw. einem Farbmessgerät lässt sich dieser Effekt an entsprechend präparierten Mattlacken reproduzierbar messtechnisch erfassen.

Durch die Applikation von Lackfilmen auf schwarze Glasscheiben wird je nach Ausprägung des Schleiers die Farbtiefe der schwarzen Glasscheibe gemindert. Über die Messung der Density = Farbtiefe durch die Lackschicht kann indirekt eine Aussage über die Ausprägung des Schleiers getroffen werden.

Geräte

Farbmessgerät SpectroEye Gretag Macbeth

Arbeitsvorschrift

Kalibrierung

Das Gerät verfügt über eine Routine zur Eigenkalibrierung. Diese erfolgt unmittelbar nach Einschalten des Gerätes.

Grundeinstellung

Im Hauptmenü > Einstellungen > Benutzerbezogen > Standard Messung > Messbedingungen sind folgende Einstellungen zu wählen:

| Parameter | Einstellung |
|---|---|
| Physikalischer Filter | No |
| Weissbezug | Abs |
| Lichtart | D65 |
| Beobachtungswinkel | 10° |
| Dichtestandard | DIN |

Im Messfenster > Messfunktion die Funktion "Dichte" auswählen.
Im Messfenster > Absolut/Differenz die Funktion "Absolut" wechseln.
Im Messfenster > Grafisch/Numerisch die Funktion "Numerisch" wechseln.
Im Messfenster > Dichtefilter den Filter "Gelb" anwählen. Im Display erscheint Dy für "Dichtemessung mit Gelbfilter".
Im Messfenster > Mittelwertbildung kann die automatische Mittelwertbildung mit Vorgabe der Anzahl der Werte eingestellt werden.
Im Messfenster > Dichtefilter den Gelbfilter anwählen.

Messung

Das Gerät im Messfenster mit dem Drehrad auf "Probe" einstellen. Durch Drücken der Messtaste wird die Messung gestartet. Es werden mind. 5 Messungen durchgeführt. Es ist darauf zu achten, dass die Messstellen keine Schädigungen, wie Krater, Einschlüsse, Kratzer, Luftblasen etc. aufweisen. Die größte zulässige Abweichung zwischen dem niedrigsten und höchsten Wert darf D = 0,05 betragen. Aus den ermittelten Messdaten ist ein Mittelwert (sofern nicht automatisch aktiviert) zu bilden.

Herstellung des mattierten UV-Überdrucklackes:

Vor Verwendung wird der glänzende Basislack mit dem Flügelrührer bei 2.000 U/min homogenisiert. In 100 Gew.-Tln. dieses Basislackes werden die zu untersuchenden Mattierungsmittel

a) mit gleicher Einwaage (um Unterschiede in den Reflektometerwerten des applizierten mattierten Lackes darzustellen),
b) mit verschiedenen Einwaagen (um bei 15μm Trockenfilmstärke den gleichen Reflektometerwert zu erhalten)
c) mit verschiedenen Einwaagen (um bei gleicher Viskosität die die erzielbaren Reflektometerwerte zu bestimmen)

gegen die entsprechenden Standardmuster geprüft. Nach sorgfältiger Einarbeitung mit Hilfe eines Spatels wird das Mattierungsmittel in einem 350ml PE-Becher mit einem Flügelrührer 10 Minuten bei 2.000U/min. dispergiert.

Die folgenden Beispiele dienen zur Erläuterung der Erfindung und sollen deren Schutzumfang, wie in den Patentansprüchen dargelegt, nicht einschränken.

<u>Beispiel 1:</u>

Herstellung des erfindungsgemäßen Mattierungsmittels

In einer AFG 200 Aeroplex-Fließbett-Gegenstrahlmühle der Fa. Hosokawa Alpine AG wurde die gefällte Kieselsäure ACEMATT® HK 400 der Firma Evonik Degussa GmbH bei einer Mahllufteintrittstemperatur von 76 °C (Mahlkammerinnenraum-Temperatur = 60 °C) und einem Druck von 0,4 bar (abs) vermahlen und mit dem Silikonpolyetheracrylat Tego® Rad 2300 der Firma Evonik Goldschmidt GmbH belegt.

Dabei wird das Coatungsmittel über eine Zweistoffdüse, welche sich in der gleichen Ebene befindet wie die Mahldüsen (3 Mahldüsen im Abstand von 120° und zwischen zwei dieser Mahldüsen die Zweistoffdüse im Abstand von 60°), in die Mühle eingedüst. Die Menge des Silikonpolyetheracrylats wird so berechnet, dass sich bezogen auf das Gesamtgewicht des Endprodukts ein Kohlenstoffgehalt von 3,2 Gew.-% einstellt. Das Produkt weist einen $d_{50}$-Wert von 4,7 μm auf.

Vergleichsbeispiel 1:

Es handelt sich hierbei um das Mattierungsmittel ACEMATT® OK 607, welches von der Firma Evonik Degussa vertrieben wird.

Vergleichsbeispiel 2:

Hierbei handelt es sich um das kommerziell erhältliche Produkte Syloid RAD 2005 der Firma Grace.

Vergleichsbeispiel 3:

Hierbei handelt es sich um das kommerziell erhältliche Produkte Syloid RAD 2105 der Firma Grace.

Anwendungstechnische Ergebnisse:

Es wurde wie folgt ein mit den o.g. Mattierungsmitteln mattierter UV-Überdruckfarbe hergestellt:

Rezeptur:

| Pos | Rohstoff | Gehalt | Hersteller | Menge (Gramm) |
|---|---|---|---|---|
| **1** | Laromer® PO 43 F | Lieferform | BASF | 87,70 |
| **2** | Ebecryl® P 116 | Lieferform | Cytec | 5,0 |
| **3** | Benzophenon | | | 8 |
| **4** | Lucirin® TPO-L | | BASF | 0,3 |
| **5** | Mattierungsmittel | siehe Beispiele | | 10 |
| **6** | Byk 2009 | | Byk-Chemie GmbH | * |
| * Die Menge an Byk 2009 beträgt 3 Gew.-%, bezogen auf das Gewicht der Pos. 1 - 5. | | | | |

Die einzelnen Rohstoffe werden in der o.g. Reihenfolge schrittweise eingewogen und mittels eines Labordissolvers (8.000 Umdrehungen/Minute, 30 Minuten) homogenisiert. Eine Homogenisierung muss jeweils nach den Positionen 3 und 4 erfolgen. Nach Position 4 wird der Basisklarlack bis zum völligen Lösen aller Feststoffkomponenten gerührt.

Die einzelnen Lackproben wurden zum einen auf einer Maschine der Firma Prüfbau (in der Ergebnistabelle mit "Prüfbau" abgekürzt) mit 2g/m$^2$ auf einen schwarzen Glanzkörper mit einem Ausgangsglanzwert von 72 gedruckt.

Der zweite Versuch erfolgte mit einem Flexiproof Probeandruckgerät der Firma Erichsohn, (in der Ergebnistabelle mit "Flexiproof" abgekürzt) das Schöpfvolumen der Walze betrug 6 ml/m$^2$, als Unterlage diente ein schwarz bedrucktes Aluminiumblech mit einem Glanzgrad von 81.

Die Härtung der Lacke erfolgt unter eine UV-Lampe mit 200 Watt elektrischer Anschlußleistung, geregelt auf 75%, mit einer Vorschubgeschwindigkeit von 50 m/Minute.

Ergebnisse der Glanzmessungen (60°)

| Mattierungsmittel | Prüfbau | Flexiproof |
|---|---|---|
| **erfindungsgemäß, nach Beispiel 1** | 15 | 15 |
| **Vergleichsbeispiel 1** | 19 | 16 |
| **Vergleichsbeispiel 2** | 21 | 32 |
| **Vergleichsbeispiel 3** | 20 | 26 |

Die Ergebnisse zeigen, daß mit dem erfindungsgemäßen Mattierungsmittel geringere Glanzgrade, d.h. eine deutlich bessere Mattierung erreicht wird als mit den Produkten des Standes der Technik.

## Patentansprüche

1. UV-Lack,
**dadurch gekennzeichnet,**
**dass** er zumindest ein oberflächenmodifiziertes Siliciumdioxid umfasst, wobei zumindest Teile der Siliciumdioxidpartikel mit zumindest einem Organopolysiloxan belegt sind und dass zumindest ein Organopolysiloxan zumindest eine Mehrfachbindung enthält das oberflächemodifizierte Siliciumdioxid einen C-Gehalt von 1 Gew.% - 20 Gew.-% aufweist, das Siliciumdioxid eine gefällte Kieselsäure oder pyrogene Kieselsäure ist und das Organopolysiloxan ein Silikonpolyetheracrylat-Polymer und/oder Silikonpolyethermethacrylat-Polymer ist.

2. UV-Lack nach Anspruch 1,
**dadurch gekennzeichnet,**
**dass** das oberflächenmodifizierte Siliciumdioxid zumindest einen der nachfolgenden physikalisch-chemischen Parameter aufweist:

   $d_{50}$: 1 $\mu$m bis 50 $\mu$m, bevorzugt 1 $\mu$m bis 40 $\mu$m, besonders bevorzugt 1 $\mu$m bis 30 $\mu$m, speziell bevorzugt 2 $\mu$m bis 20 $\mu$m und ganz speziell bevorzugt 3 $\mu$m bis 15 $\mu$m
   DBP: 100 g/100g - 600 g/100g, bevorzugt 150 g/100g - 500 g/100g, besonders bevorzugt 200 g/100g - 450 g/100g und speziell bevorzugt 250 g/100g - 400 g/100g
   C-Gehalt: 1 Gew. % - 10 Gew. % und bevorzugt 2 Gew. % - 8 gew. %.

3. UV-Lack nach einem der Ansprüche 1 oder 2,
**dadurch gekennzeichnet,**
**dass** das obertlächenmodifizierte Siliciumdioxid die Transmission eines UV-Lacks, mit einem Brechungsindex von $n_D20$ = 1.4000 bis 1.5000, enthaltend 5 Gew. % dieses oberflächenmodifizierten Siliciumdioxids, im Vergleich zu einem identischen Lack enthaltend 5 Gew. % einer mit einem Polyethylenwachs behandelten Referenz-Siliciumdioxids, um mindestens 20 % verbessert.

4. UV-Lack nach Anspruch 3,
**dadurch gekennzeichnet,**
**dass** es sich bei dem Referenz-Siliciumdioxids um ACEMATT® OK 607 handelt.

5. UV-Lack nach Anspruch 1,
**dadurch gekennzeichnet,**
**dass** es sich bei den Organopolysiloxanen um Acrylsäureester und/oder Methacrylsäureester von hydroxyfunktionellen Siloxanen und/oder polyalkylenmodifizierten Siloxanen handelt.

6. UV-Lack nach Anspruch 5,
**dadurch gekennzeichnet,**
**dass** das Polysiloxan einen Überschuss an Polyether von 5 Gew.-% bis 50 Gew.-%, bevorzugt 5 Gew.-% bis 40 Gew.-%, besonders bevorzugt 10 Gew.-% bis 30 Gew. % und ganz besonders bevorzugt 10 Gew.-% bis 20 Gew.-% aufweist.

7. UV-Lack nach einem der Ansprüche 1 bis 6,
**dadurch gekennzeichnet,**
**dass** das es sich um einen Klarlack oder einen pigmentierten Lack handelt.

8. UV-Lack nach einem der Ansprüche 1 bis 7,
**dadurch gekennzeichnet,**
**dass** er ein Bindemittel auf Basis reaktiver Monomere bzw. Oligomere, bevorzugt von Acrylaten oder substituierten Acrylaten, besonders bevorzugt Epoxy-, Polyester-, Polyether-, Oligoether- oder Polyurethanacrylate umfasst.

9. UV-Lack nach einem der Ansprüche 1 bis 8,
**dadurch gekennzeichnet,**

**dass** er 3 Gew.-% bis 30 Gew.-%, bevorzugt 5 Gew.-% bis 20 Gew.-% und ganz besonders bevorzugt 8 Gew.-% bis 15 Gew.-% des organopolysiloxan modifizierten Siliciumdioxids und/oder zumindest eine Komponente ausgewählt aus der Gruppe bestehend aus Fotoinitiatoren, Verlaufsmittel, Antioxidantien, Pigmente, mikrokristalline Wachse, organische Lösemittel und Wasser, umfasst.

**10.** Verfahren zur Herstellung von oberflächenmodifizierten Siliciumdioxiden gemäß Definition in einem der Ansprüche 1 bis 6, **dadurch gekennzeichnet, dass** ein getrocknetes Siliciumdioxid oder eine Suspension des Siliciumdioxids oder ein Filterkuchen mit zumindest einem Organopolysiloxan enthaltend zumindest eine Mehrfachbindung in Kontakt gebracht wird, <u>wobei das Siliciumdioxid eine gefällte Kieselsäure oder pyrogene Kieselsäure ist und das Organopolysiloxan ein Silikonpolyetheracrylat-Polymer und/oder Silikonpolyethermethacrylat-Polymer ist.</u>

**11.** Verfahren nach Anspruch 10,
**dadurch gekennzeichnet,**
**dass** es zumindest einen der folgenden Schritte umfasst:

a) Umsetzen einer Alkalisilikatlösung mit einem Säuerungsmittel, bevorzugt unter alkalischen bis schwach sauren Bedingungen,
b) weitere Zugabe eines Säuerungsmittels zur Einstellung eines pH-Werts von 7 bis 2 unter Erhalt einer Siliciumdioxidsuspension,
c) Abfiltrieren des ausgefällten Feststoffs und
d) Trocknung des Feststoffs mittels Langzeittrocknung, z.B. Drehrohrtrockner oder Tellertrockner, oder mittels Kurzzeittrocknung, z.B. Sprühtrockner, Spinflashtrockner so, dass das Produkt eine Restfeuchte von kleiner 10 % aufweist,
e) behandeln des so erhaltenen Siliciumdioxids mit zumindest einem Organopolysiloxan enthaltend zumindest eine Mehrfachbindung.

**12.** Verfahren gemäß Anspruch 10,
**dadurch gekennzeichnet,**
**dass** 0.5 Gew.-% bis 30 Gew.-% eines oberflächenmodifizierenden Polysiloxans gemäß einem der Ansprüche 5 oder 6 zugegeben werden.

**13.** Verfahren gemäß Anspruch 11 oder 12,
**dadurch gekennzeichnet,**
**daß** das gemäß Schritt c) abfiltrierte und gegebenenfalls mit deionisiertem Wasser gewaschene Siliciumdioxid mit Wasser oder Schwefelsäure oder einem Gemisch aus Wasser und Schwefelsäure resuspendiert und anschließend das oberflächenmodifizierende Organopolysiloxan gemäß einem der Ansprüche 5 oder 6 in die Suspension gegeben und die so erhaltene Suspension getrocknet, bevorzugt sprühgetrocknet wird, besonders bevorzugt so, dass das Produkt eine Restfeuchte kleiner 10 Gew. % aufweist.

**14.** Verfahren gemäß Anspruch 11 oder 12,
**dadurch gekennzeichnet,**
**dass** das Siliciumdioxid nach Schritt d) mit einem oberflächenmodifizierenden Organopolysiloxan gemäß einem der Ansprüche 5 oder 6 versetzt und innig vermischt wird, bevorzugt für eine Dauer von 0 Minuten bis 120 Minuten.

**15.** Verfahren nach Anspruch 14,
**dadurch gekennzeichnet,**
**dass** die Kieselsäure und das Organopolysiloxan 0 h - 2 h weiter gemischt und/oder bei 20 Grad C bis 150 Grad C getempert werden.

**16.** Verfahren nach einem der Ansprüche 10 bis 15,
**dadurch gekennzeichnet,**
**dass** nach der Trocknung des oberflächenmodifizierten <u>Siliciumdioxid</u> eine Vermahlung durchgeführt und/oder Partikel mit einem Durchmesser über 50 μm abgetrennt werden.

**17.** Verfahren nach Anspruch 10,
**dadurch gekennzeichnet,**
**dass** ein Siliciumdioxid,
in einer Mahlapparatur, bevorzugt einer Strahlmühle, gleichzeitig vermahlen und oberflächenmodifiziert wird.

**18.** Verfahren nach Anspruch 17,
**dadurch gekennzeichnet,**
**dass** das Mahlgas einen Druck von ≤ 4 bar(abs) und/oder eine Temperatur von kleiner gleich 180 Grad C, bevorzugt kleiner 100 Grad C aufweist.

**19.** Verfahren zur Herstellung ein UV-Lacks, **dadurch gekennzeichnet, dass** es einen Verfahrensschritt gemäß einem der Ansprüche 10 bis 18 umfasst.

**20.** Verfahren nach Anspruch 19, **dadurch gekennzeichnet, dass** ein organopolysiloxan modifiziertes Siliciumdioxid gemäß Definition in einem der Ansprüche 1 bis 6 bzw. hergestellt nach einem der Ansprüche 10 bis 18 in eine UV-Lackzusammensetzung eingearbeitet wird.

**21.** Verwendung der UV-Lackzusammensetzung nach einer der vorstehenden Ansprüche 1 bis 9 zur Herstellung von UV-Überdrucklacken.

**22.** UV-Überdrucklack, erhältlich unter Verwendung einer Lackzusammensetzung gemäß der Ansprüche 1 bis 9.

**23.** Verfahren nach Anspruch 19, **dadurch gekennzeichnet, daß** ein organopolysiloxan modifiziertes Siliciumdioxid gemäß Definition in einem der Ansprüche 1 bis 6 bzw. hergestellt nach einem der Ansprüche 10 bis 18 in eine UV-überdruckfarbenzusammensetzung eingearbeitet wird.

## Claims

**1.** UV lacquer
**characterized**
**in that** it comprises at least one surface-modified silicon dioxide, at least parts of the silicon dioxide particles being coated with at least one organopolysiloxane, and in that at least one organopolysiloxane contains at least one multiple bond, the surface-modified silicon dioxide has a C content of 1% by weight - 20% by weight, the silicon dioxide is a precipitated silica or fumed silica and the organopolysiloxane is a silicone polyether acrylate polymer and/or silicone polyether methacrylate polymer.

**2.** UV lacquer according to Claim 1,
**characterized**
**in that** the surface-modified silicon dioxide has at least one of the following physicochemical parameters:

$d_{50}$: 1 μm to 50 μm, preferably 1 μm to 40 μm, more preferably 1 μm to 30 μm, very preferably 2 μm to 20 μm and especially preferably 3 μm to 15 μm
DBP: 100 g/100 g - 600 g/100 g, preferably 150 g/100 g - 500 g/100 g, more preferably 200 g/100 g - 450 g/100 g and very preferably 250 g/100 g - 400 g/100 g
C content: 1% by weight - 10% by weight and preferably 2% by weight - 8% by weight.

**3.** UV lacquer according to either of Claims 1 and 2,
**characterized**
**in that** the surface-modified silicon dioxide improves by at least 20% the transmittance of a UV lacquer having a refractive index of $n_D20$ = 1.4000 to 1.5000 and containing 5% by weight of said surface-modified silicon dioxide, in comparison to an identical lacquer containing 5% by weight of a reference silicon dioxide treated with a polyethylene wax.

**4.** UV lacquer according to Claim 3,
**characterized**
**in that** the reference silicon dioxide is ACEMATT® OK 607.

**5.** UV lacquer according to Claim 1,
**characterized**
**in that** the organopolysiloxanes are acrylic esters and/or methacrylic esters of hydroxy-functional siloxanes and/or of polyalkylene-modified siloxanes.

6. UV lacquer according to Claim 5,
**characterized**
**in that** the polysiloxane has a polyether excess of 5% by weight to 50% by weight, preferably 5% by weight to 40% by weight, more preferably 10% by weight to 30% by weight and very preferably 10% by weight to 20% by weight.

7. UV lacquer according to any of Claims 1 to 6,
**characterized**
**in that** it is a clear lacquer or a pigmented lacquer.

8. UV lacquer according to any of Claims 1 to 7,
**characterized**
**in that** it comprises a binder based on reactive monomers and/or oligomers, preferably of acrylates or substituted acrylates, more preferably epoxy, polyester, polyether, oligoether or polyurethane acrylates.

9. UV lacquer according to any of Claims 1 to 8,
**characterized**
**in that** it comprises 3% by weight to 30% by weight, preferably 5% by weight to 20% by weight and very preferably 8% by weight to 15% by weight of the organopolysiloxane-modified silicon dioxide and/or at least one component selected from the group consisting of photoinitiators, flow control agents, antioxidants, pigments, microcrystalline waxes, organic solvents and water.

10. Process for preparing surface-modified silicon dioxides as defined in any of Claims 1 to 6, **characterized in that** a dried silicon dioxide or a suspension of the silicon dioxide or a filter cake is contacted with at least one organopolysiloxane containing at least one multiple bond, wherein the silicon dioxide is a precipitated silica or fumed silica and the organopolysiloxane is a silicone polyether acrylate polymer and/or silicone polyether methacrylate polymer.

11. Process according to Claim 10,
**characterized**
**in that** it comprises at least one of the following steps:

a) reacting an alkali metal silicate solution with an acidifier, preferably under alkaline to weakly acidic conditions,
b) further adding an acidifier to set a pH of 7 to 2, to give a silicon dioxide suspension,
c) isolating the precipitated solid by filtration, and
d) drying the solid by means of slow drying, e.g. rotary tube dryers or plate dryers, or by means of rapid drying, e.g. spray dryers, spin flash dryers, such that the product has a residual moisture content of less than 10%,
e) treating the resulting silicon dioxide with at least one organopolysiloxane containing at least one multiple bond.

12. Process according to Claim 10,
**characterized**
**in that** 0.5% by weight to 30% by weight of a surface-modifying polysiloxane according to either of Claims 5 and 6 is added.

13. Process according to Claim 11 or 12,
**characterized**
**in that** the silicon dioxide isolated by filtration in step c) and optionally washed with deionized water is resuspended with water or sulphuric acid or with a mixture of water and sulphuric acid and then the surface-modifying organopolysiloxane according to either of Claims 5 or 6 is added to the suspension and the resulting suspension is dried, preferably spray-dried, more preferably such that the product has a residual moisture content of less than 10% by weight.

14. Process according to Claim 11 or 12,
**characterized**
**in that** the silicon dioxide after step d) is admixed and intimately mixed with a surface-modifying organopolysiloxane according to either of Claims 5 or 6, preferably for a duration of 0 minutes to 120 minutes.

15. Process according to Claim 14,
**characterized**
**in that** the silica and the organopolysiloxane are for 0 h - 2 h mixed further and/or heat-treated at 20 degrees C to

150 degrees C.

16. Process according to any of Claims 10 to 15, **characterized** **in that**, subsequent to the drying of the surface-modified silicon dioxide, grinding is carried out and/or particles having a diameter of more than 50 μm are separated off.

17. Process according to Claim 10, **characterized** **in that** a silicon dioxide is simultaneously ground and surface-modified in a milling apparatus, preferably a jet mill.

18. Process according to Claim 17, **characterized** **in that** the milling gas has a pressure of ≤ 4 bar (abs) and/or a temperature of less than or equal to 180 degrees C, preferably less than 100 degrees C.

19. Process for producing a UV lacquer, **characterized in that** it comprises a process step according to any of Claims 10 to 18.

20. Process according to Claim 19, **characterized in that** an organopolysiloxane-modified silicon dioxide as defined in any of Claims 1 to 6 and/or prepared according to any of Claims 10 to 18 is incorporated into a UV lacquer composition.

21. Use of the UV lacquer composition according to any of preceding Claims 1 to 9 for producing UV overprint varnishes.

22. UV overprint varnish obtainable using a lacquer composition according to Claims 1 to 9.

23. Process according to Claim 19, **characterized in that** an organopolysiloxane-modified silicon dioxide as defined in any of Claims 1 to 6 or prepared according to any of Claims 10 to 18 is incorporated into a UV overprinting ink composition.

## Revendications

1. Laque UV, **caractérisée en ce qu'**elle comprend au moins un dioxyde de silicium modifié en surface, au moins des parties des particules de dioxyde de silicium étant recouvertes par au moins un organopolysiloxane et au moins un organopolysiloxane contenant au moins une liaison multiple, le dioxyde de silicium modifié en surface présentant une teneur en C de 1% en poids-20% en poids, le dioxyde de silicium étant une silice précipitée ou une silice pyrogène et l'organopolysiloxane étant un polymère de silicone-polyétheracrylate et/ou un polymère de silicone-polyétherméthacrylate.

2. Laque UV selon la revendication 1, **caractérisée en ce que** le dioxyde de silicium modifié en surface présente au moins un des paramètres physico-chimiques suivants :

   $d_{50}$: 1 μm à 50 μm, de préférence 1 μm à 40 μm, de manière particulièrement préférée 1 μm à 30 μm, en particulier de préférence 2 μm à 20 μm et de manière tout particulièrement préférée 3 μm à 15 μm
   DBP: 100 g/100 g-600 g/100 g, de préférence 150 g/100 g-500 g/100 g, de manière particulièrement préférée 200 g/100 g-450 g/100 g et en particulier de préférence 250 g/100 g-400 g/100 g
   teneur en C : 1% en poids-10% en poids et de préférence 2% en poids-8% en poids.

3. Laque UV selon l'une quelconque des revendications 1 ou 2, **caractérisée en ce que** le dioxyde de silicium modifié en surface améliore la transmission d'une laque UV, présentant un indice de réfraction $n_D20$ = 1,4000 à 1,5000, contenant 5% en poids de ce dioxyde de silicium modifié en surface, par rapport à une laque identique contenant 5% en poids d'un dioxyde de silicium de référence traité par une cire de polyéthylène, d'au moins 20%.

4. Laque UV selon la revendication 3, **caractérisée en ce qu'**il s'agit, pour le dioxyde de silicium de référence, d'ACEMATT® OK 607.

5. Laque UV selon la revendication 1, **caractérisée en ce qu'**il s'agit, pour les organopolysiloxanes, d'esters de l'acide acrylique et/ou d'esters de l'acide méthacrylique de siloxanes à fonctionnalité hydroxy et/ou de siloxanes modifiés par polyalkylène.

6. Laque UV selon la revendication 5, **caractérisée en ce que** le polysiloxane présente un excès de polyéther de 5% en poids à 50% en poids, de préférence de 5% en poids à 40% en poids, de manière particulièrement préférée de 10% en poids à 30% en poids et de manière tout particulièrement préférée de 10% en poids à 20% en poids.

7. Laque UV selon l'une quelconque des revendications 1 à 6, **caractérisée en ce qu'**il s'agit d'une laque claire ou d'une laque pigmentée.

8. Laque UV selon l'une quelconque des revendications 1 à 7, **caractérisée en ce qu'**elle comprend un liant à base de monomères ou d'oligomères réactifs, de préférence d'acrylates ou d'acrylates substitués, de manière particulièrement préférée d'époxyacrylates, de polyesteracrylates, de polyétheracrylates, d'oligoétheracrylates ou de polyuréthane-acrylates.

9. Laque UV selon l'une quelconque des revendications 1 à 8, **caractérisée en ce qu'**elle comprend 3% en poids à 30% en poids, de préférence 5% en poids à 20% en poids et de manière tout particulièrement préférée 8% en poids à 15% en poids du dioxyde de silicium modifié par un organopolysiloxane et/ou d'au moins un composant choisi dans le groupe constitué par les photo-initiateurs, les agents d'étalement, les antioxydants, les pigments, les cires microcristallines, les solvants organiques et l'eau.

10. Procédé pour la préparation de dioxyde de silicium modifié en surface selon la définition dans l'une quelconque des revendications 1 à 6, **caractérisé en ce qu'**on met en contact un dioxyde de silicium séché ou une suspension du dioxyde de silicium ou un gâteau de filtration avec au moins une organopolysiloxane contenant au moins une liaison multiple, le dioxyde de silicium étant une silice précipitée ou une silice pyrogène et l'organopolysiloxane étant un polymère de silicone-polyétheracrylate et/ou un polymère de silicone-polyétherméthacrylate.

11. Procédé selon la revendication 10, **caractérisé en ce qu'**il comprend au moins une des étapes suivantes :

    a) transformation d'une solution de silicate de métal alcalin avec un agent d'acidification, de préférence dans des conditions alcalines à faiblement acides,
    b) nouvelle addition d'un agent d'acidification pour le réglage d'un pH de 7 à 2 avec obtention d'une suspension de dioxyde de silicium,
    c) séparation par filtration du solide précipité et
    d) séchage du solide par séchage long, par exemple par un sécheur à tube rotatif ou à assiette, ou par séchage court, par exemple par un sécheur par pulvérisation, un sécheur centrifuge instantané, de telle sorte que le produit présente une humidité résiduelle inférieure à 10%,
    e) traitement du dioxyde de silicium ainsi obtenu avec au moins un organopolysiloxane contenant au moins une liaison multiple.

12. Procédé selon la revendication 10, **caractérisé en ce qu'**on ajoute 0,5% en poids à 30% en poids d'un polysiloxane modifiant la surface selon l'une quelconque des revendications 5 ou 6.

13. Procédé selon la revendication 11 ou 12, **caractérisé en ce que** le dioxyde de silicium séparé par filtration selon l'étape c) et le cas échéant lavé à l'eau désionisée est remis en suspension avec de l'eau ou de l'acide sulfurique ou avec un mélange d'eau et d'acide sulfurique, puis l'organopolysiloxane modifiant la surface selon l'une quelconque des revendications 5 ou 6 est ajouté à la suspension et la suspension ainsi obtenue est séchée, de préférence séchée par pulvérisation, de manière particulièrement préférée de telle sorte que le produit présente une humidité résiduelle inférieure à 10% en poids.

14. Procédé selon la revendication 11 ou 12, **caractérisé en ce que** le dioxyde de silicium selon l'étape d) est additionné d'un organopolysiloxane modifiant la surface selon l'une quelconque des revendications 5 ou 6 et mélangé intimement, de préférence pendant une durée de 0 à 120 minutes.

15. Procédé selon la revendication 14, **caractérisé en ce que** la silice et l'organopolysiloxane sont mélangés davantage pendant 0 h-2 h et/ou traités thermiquement à 20°C jusqu'à 150°C.

**16.** Procédé selon l'une quelconque des revendications 10 à 15, **caractérisé en ce qu'**après le séchage du dioxyde de silicium modifié en surface, un broyage est réalisé et/ou les particules présentant un diamètre supérieur à 50 μm sont séparées.

**17.** Procédé selon la revendication 10, **caractérisé en ce qu'**un dioxyde de silicium est simultanément broyé et modifié en surface dans un appareil de broyage, de préférence dans un broyeur à jets.

**18.** Procédé selon la revendication 17, **caractérisé en ce que** le gaz de broyage présente une pression $\leq$ 4 bars (abs) et/ou une température inférieure à 180°C, de préférence inférieure à 100°C.

**19.** Procédé pour la préparation d'une laque UV, **caractérisé en ce qu'**il comprend une étape de procédé selon l'une quelconque des revendications 10 à 18.

**20.** Procédé selon la revendication 19, **caractérisé en ce qu'**un dioxyde de silicium modifié avec un organopolysiloxane selon la définition dans l'une quelconque des revendications 1 à 6 ou préparé selon l'une quelconque des revendications 10 à 18 est incorporé dans une composition de laque UV.

**21.** Utilisation de la composition de laque UV selon l'une quelconque des revendications précédentes 1 à 9 pour la préparation de laques de surimpression UV.

**22.** Laque de surimpression UV, pouvant être obtenue par l'utilisation d'une composition de laque selon les revendications 1 à 9.

**23.** Procédé selon la revendication 19, **caractérisé en ce qu'**un dioxyde de silicium modifié avec un organopolysiloxane selon la définition dans l'une quelconque des revendications 1 à 6 ou préparé selon l'une quelconque des revendications 10 à 18 est incorporé dans une composition d'encre de surimpression UV.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 2009103651 A2
- DE 102008010346 A1
- WO 2008068154 A2
- WO 2006108520 A1
- US 2004038036 A1
- WO 0224344 A2
- DE 3144299
- DE 102006048850

### In der Beschreibung aufgeführte Nicht-Patentliteratur

- Ullmanns Encyclopedia of Chemistry. vol. 23